# EUROPEAN PATENT APPLICATION

(11) **EP 4 704 467 A1**
(43) Date of publication of application: **04.03.2026**
(21) Application number: 23934660.4
(22) Date of filing: 28.04.2023
(51) Int. Cl.: H04W 36/08

(54) **INFORMATION TRANSMISSION METHOD AND APPARATUS, AND COMMUNICATION DEVICE AND STORAGE MEDIUM**

(71) Applicant: Beijing Xiaomi Mobile Software Co., Ltd., Beijing 100085 (CN)
(72) Inventor: JIANG, Xiaowei, Beijing 100085 (CN)
(74) Representative: Gunzelmann, Rainer
(86) International application number: PCT/CN2023/091894
(87) International publication number: WO 2024/221473

(57) **Abstract**

Provided in the embodiments of the present disclosure are an information transmission method and apparatus, and a communication device and a storage medium. The method comprises: a network device sending at least one set of cell discontinuous transport configurations to a user equipment (UE), wherein the set of cell discontinuous transport configuration is associated with at least one cell, and/or one UE discontinuous reception (DRX) configuration; and the cell discontinuous transport configuration comprises: a cell discontinuous transmission (Cell DTX) configuration and/or a cell discontinuous reception (Cell DRX) configuration.

## Description

### TECHNICAL FIELD

The disclosure relates to, but is not limited to a field of wireless communications technologies, and specifically to an information transmission/reception method and apparatus, a communication device and a storage medium.

### BACKGROUND

The main application scenarios of 5th Generation (5G) mobile communication technology include Enhanced Mobile Broadband (eMBB), Ultra-reliable and Low Latency Communications (URLLC), and Massive Machine Type Communication (mMTC). eMBB aims to provide users with multimedia content, services, and data, and its demand is growing rapidly. Typical applications of URLLC include industrial automation, power automation, remote medical operations (surgery), traffic safety assurance, etc. The typical characteristics of mMTC include high connection density, small data volume, latency insensitive services, low module cost, and long service life.

### SUMMARY

Embodiments of the present disclosure provide an information transmission/reception method and apparatus, a communication device and a storage medium.

Embodiments of a first aspect of the present disclosure provides an information transmission/reception method, performed by a network device, including:
transmitting at least one set of cell discontinuous transmission/reception configuration to a user equipment (UE), wherein one set of cell discontinuous transmission/reception configuration is associated with at least one cell and/or one UE discontinuous reception (DRX) configuration, wherein the cell discontinuous transmission/reception configuration includes a cell discontinuous transmission (Cell DTX) configuration and/or a cell discontinuous reception (Cell DRX) configuration.

In an embodiment, at least one set of cell discontinuous transmission/reception configuration includes a first cell discontinuous transmission/reception configuration;
transmitting at least one set of cell discontinuous transmission/reception configuration to the UE includes:
transmitting the first cell discontinuous transmission/reception configuration to the UE, wherein the first cell discontinuous transmission/reception configuration is associated with a preset cell, and/or the first cell discontinuous transmission/reception configuration is associated with a first UE DRX configuration.

In an embodiment, the preset cell includes a serving cell of the UE.

In an embodiment, transmitting the first cell discontinuous transmission/reception configuration to the UE includes:
transmitting the first cell discontinuous transmission/reception configuration to the UE in a first frequency band.

In an embodiment, the at least one set of cell discontinuous transmission/reception configuration further includes a second cell discontinuous transmission/reception configuration;
transmitting at least one set of cell discontinuous transmission/reception configuration to the UE further includes:
transmitting the second cell discontinuous transmission/reception configuration to the UE, wherein the second cell discontinuous transmission/reception configuration is associated with a second UE DRX configuration, and the second UE DRX configuration is different from the first UE DRX configuration.

In an embodiment, the method further includes:
transmitting first indication information to the UE, wherein the first indication information is used to determine a cell associated with the second cell discontinuous transmission/reception configuration.

In an embodiment, transmitting the second cell discontinuous transmission/reception configuration to the UE includes:
transmitting the second cell discontinuous transmission/reception configuration to the UE in a second frequency band.

In an embodiment, the first indication information is carried in the second cell discontinuous transmission/reception configuration.

In an embodiment, the cell discontinuous transmission/reception configuration includes an identifier of the at least one cell associated with the cell discontinuous transmission/reception configuration; and/or, the cell discontinuous transmission/reception configuration includes an identifier of the UE DRX configuration associated with the cell discontinuous transmission/reception configuration.

In an embodiment, cell configuration information of the network device includes at least one of:
information of a cell discontinuous transmission/reception configuration associated with each cell; or
information of UE DRX configuration associated with each cell.

In an embodiment, the UE DRX configuration includes at least one of:
UE connected state-discontinuous reception (C-DRX) configuration per cell; or
UE C-DRX configuration per cell group.

In an embodiment, the method further includes:
transmitting second indication information to the UE, wherein the second indication information is used to determine a valid area of the cell discontinuous transmission/reception configuration.

In an embodiment, the second indication information includes at least one of:
an area identifier;
an identifier of at least one cell;
an access network code; or
a tracking area code.

In an embodiment, the cell discontinuous transmission/reception configuration includes the second indication information.

In an embodiment, the method further includes:
determining that the UE switches from a first cell to a second cell, and transmitting third indication information to the UE, wherein the third indication information indicates at least one of:
a difference between the cell discontinuous transmission/reception configuration of the first cell and the cell discontinuous transmission/reception configuration of the second cell;
whether the cell discontinuous transmission/reception configuration of the first cell is consistent with the cell discontinuous transmission/reception configuration of the second cell; or
whether to release the cell discontinuous transmission/reception configuration of the first cell.

In an embodiment, the cell discontinuous transmission/reception configuration at least includes configuration of an inactivity timer;
the method further includes: transmitting start/stop information to the UE, wherein the start/stop information is used for the UE to start or stop the inactivity timer.

In an embodiment, an identifier of the cell discontinuous transmission/reception configuration is associated with an identifier of the UE DRX configuration.

Embodiments of a second aspect of the present disclosure provide an information transmission/reception method, performed by a user equipment (UE), including:
receiving at least one set of cell discontinuous transmission/reception configuration transmitted by a network device, wherein one set of cell discontinuous transmission/reception configuration is associated with at least one cell and/or one UE discontinuous reception (DRX) configuration, wherein the cell discontinuous transmission/reception configuration includes a cell discontinuous transmission (Cell DTX) configuration and/or a cell discontinuous reception (Cell DRX) configuration.

In an embodiment, at least one set of cell discontinuous transmission/reception configuration includes a first cell discontinuous transmission/reception configuration;
receiving at least one set of cell discontinuous transmission/reception configuration transmitted by the network device includes:
receiving the first cell discontinuous transmission/reception configuration transmitted by the network device, wherein the first cell discontinuous transmission/reception configuration is associated with a preset cell, and/or the first cell discontinuous transmission/reception configuration is associated with a first UE DRX configuration.

In an embodiment, the preset cell includes a serving cell of the UE.

In an embodiment, receiving the first cell discontinuous transmission/reception configuration transmitted by the network device includes:
receiving the first cell discontinuous transmission/reception configuration transmitted by the network device in a first frequency band.

In an embodiment, the at least one set of cell discontinuous transmission/reception configuration further includes a second cell discontinuous transmission/reception configuration;
receiving at least one set of cell discontinuous transmission/reception configuration transmitted by the network device further includes:
receiving the second cell discontinuous transmission/reception configuration transmitted by the network device, wherein the second cell discontinuous transmission/reception configuration is associated with a second UE DRX configuration, and the second UE DRX configuration is different from the first UE DRX configuration.

In an embodiment, the method further includes:
receiving first indication information transmitted by the network device, wherein the first indication information is used to determine a cell associated with the second cell discontinuous transmission/reception configuration.

In an embodiment, receiving the second cell discontinuous transmission/reception configuration transmitted by the network device includes:
receiving the second cell discontinuous transmission/reception configuration transmitted by the network device in a second frequency band.

In an embodiment, the first indication information is carried in the second cell discontinuous transmission/reception configuration.

In an embodiment, the method further includes:
determining that a cell other than the cell associated with the second cell discontinuous transmission/reception configuration is associated with the first cell discontinuous transmission/reception configuration.

In an embodiment, the cell discontinuous transmission/reception configuration includes an identifier of the at least one cell associated with the cell discontinuous transmission/reception configuration; and/or, the cell discontinuous transmission/reception configuration includes an identifier of the UE DRX configuration associated with the cell discontinuous transmission/reception configuration.

In an embodiment, cell configuration information of the network device includes at least one of:
information of a cell discontinuous transmission/reception configuration associated with each cell; or
information of UE DRX configuration associated with each cell.

In an embodiment, the UE DRX configuration includes at least one of:
UE connected state-discontinuous reception (C-DRX) configuration per cell; or
UE C-DRX configuration per cell group.

In an embodiment, the method further includes:
receiving second indication information transmitted by the network device, wherein the second indication information is used to determine a valid area of the cell discontinuous transmission/reception configuration.

In an embodiment, the second indication information includes at least one of:
an area identifier;
an identifier of at least one cell;
an access network code; or
a tracking area code.

In an embodiment, the cell discontinuous transmission/reception configuration includes the second indication information.

In an embodiment, the method further includes:
receiving third indication information transmitted by the network device in response to determining that the UE switches from a first cell to a second cell, wherein the third indication information indicates at least one of:
a difference between the cell discontinuous transmission/reception configuration of the first cell and the cell discontinuous transmission/reception configuration of the second cell;
whether the cell discontinuous transmission/reception configuration of the first cell is consistent with the cell discontinuous transmission/reception configuration of the second cell; or
whether to release the cell discontinuous transmission/reception configuration of the first cell.

In an embodiment, the cell discontinuous transmission/reception configuration at least includes configuration of an inactivity timer;
the method further includes: receiving start/stop information transmitted by the network device, wherein the start/stop information is used for the UE to start or stop the inactivity timer.

In an embodiment, an identifier of the cell discontinuous transmission/reception configuration is associated with an identifier of the UE DRX configuration.

Embodiments of a third aspect of the present disclosure provide an information transmission/reception apparatus, arranged in a network device, including:
a transceiver module, configured to transmit at least one set of cell discontinuous transmission/reception configuration to a user equipment (UE), wherein one set of cell discontinuous transmission/reception configuration is associated with at least one cell and/or one UE discontinuous reception (DRX) configuration, wherein the cell discontinuous transmission/reception configuration includes a cell discontinuous transmission (Cell DTX) configuration and/or a cell discontinuous reception (Cell DRX) configuration.

In an embodiment, at least one set of cell discontinuous transmission/reception configuration includes a first cell discontinuous transmission/reception configuration;
the transceiver module is specifically configured to:
transmit the first cell discontinuous transmission/reception configuration to the UE, wherein the first cell discontinuous transmission/reception configuration is associated with a preset cell, and/or the first cell discontinuous transmission/reception configuration is associated with a first UE DRX configuration.

In an embodiment, the preset cell includes a serving cell of the UE.

In an embodiment, the transceiver module is specifically configured to:
transmit the first cell discontinuous transmission/reception configuration to the UE in a first frequency band.

In an embodiment, the at least one set of cell discontinuous transmission/reception configuration further includes a second cell discontinuous transmission/reception configuration;
the transceiver module is further configured to:
transmit the second cell discontinuous transmission/reception configuration to the UE, wherein the second cell discontinuous transmission/reception configuration is associated with a second UE DRX configuration, and the second UE DRX configuration is different from the first UE DRX configuration.

In an embodiment, the transceiver module is further configured to:
transmit first indication information to the UE, wherein the first indication information is used to determine a cell associated with the second cell discontinuous transmission/reception configuration.

In an embodiment, the transceiver module is specifically configured to:
transmit the second cell discontinuous transmission/reception configuration to the UE in a second frequency band.

In an embodiment, the first indication information is carried in the second cell discontinuous transmission/reception configuration.

In an embodiment, the cell discontinuous transmission/reception configuration includes an identifier of the at least one cell associated with the cell discontinuous transmission/reception configuration; and/or, the cell discontinuous transmission/reception configuration includes an identifier of the UE DRX configuration associated with the cell discontinuous transmission/reception configuration.

In an embodiment, cell configuration information of the network device includes at least one of:
information of a cell discontinuous transmission/reception configuration associated with each cell; or
information of UE DRX configuration associated with each cell.

In an embodiment, the UE DRX configuration includes at least one of:
UE connected state-discontinuous reception (C-DRX) configuration per cell; or
UE C-DRX configuration per cell group.

In an embodiment, the transceiver module is further configured to:
transmit second indication information to the UE, wherein the second indication information is used to determine a valid area of the cell discontinuous transmission/reception configuration.

In an embodiment, the second indication information includes at least one of:
an area identifier;
an identifier of at least one cell;
an access network code; or
a tracking area code.

In an embodiment, the cell discontinuous transmission/reception configuration includes the second indication information.

In an embodiment, the transceiver module is further configured to:
determine that the UE switches from a first cell to a second cell, and transmit third indication information to the UE, wherein the third indication information indicates at least one of:
a difference between the cell discontinuous transmission/reception configuration of the first cell and the cell discontinuous transmission/reception configuration of the second cell;
whether the cell discontinuous transmission/reception configuration of the first cell is consistent with the cell discontinuous transmission/reception configuration of the second cell; or
whether to release the cell discontinuous transmission/reception configuration of the first cell.

In an embodiment, the cell discontinuous transmission/reception configuration at least includes configuration of an inactivity timer;
the transceiver module is further configured to transmit start/stop information to the UE, wherein the start/stop information is used for the UE to start or stop the inactivity timer.

In an embodiment, an identifier of the cell discontinuous transmission/reception configuration is associated with an identifier of the UE DRX configuration.

Embodiments of a fourth aspect of the present disclosure provide an information transmission/reception apparatus, arranged in a user equipment (UE), including:
a transceiver module, configured to receive at least one set of cell discontinuous transmission/reception configuration transmitted by a network device, wherein one set of cell discontinuous transmission/reception configuration is associated with at least one cell and/or one UE discontinuous reception (DRX) configuration, wherein the cell discontinuous transmission/reception configuration includes a cell discontinuous transmission (Cell DTX) configuration and/or a cell discontinuous reception (Cell DRX) configuration.

In an embodiment, at least one set of cell discontinuous transmission/reception configuration includes a first cell discontinuous transmission/reception configuration;
the transceiver module is specifically configured to:
receive the first cell discontinuous transmission/reception configuration transmitted by the network device, wherein the first cell discontinuous transmission/reception configuration is associated with a preset cell, and/or the first cell discontinuous transmission/reception configuration is associated with a first UE DRX configuration.

In an embodiment, the preset cell includes a serving cell of the UE.

In an embodiment, the transceiver module is specifically configured to:
receive the first cell discontinuous transmission/reception configuration transmitted by the network device in a first frequency band.

In an embodiment, the at least one set of cell discontinuous transmission/reception configuration further includes a second cell discontinuous transmission/reception configuration;
the transceiver module is further configured to receive the second cell discontinuous transmission/reception configuration transmitted by the network device, wherein the second cell discontinuous transmission/reception configuration is associated with a second UE DRX configuration, and the second UE DRX configuration is different from the first UE DRX configuration.

In an embodiment, the transceiver module is further configured to:
receive first indication information transmitted by the network device, wherein the first indication information is used to determine a cell associated with the second cell discontinuous transmission/reception configuration.

In an embodiment, the transceiver module is specifically configured to receive the second cell discontinuous transmission/reception configuration transmitted by the network device in a second frequency band.

In an embodiment, the first indication information is carried in the second cell discontinuous transmission/reception configuration.

In an embodiment, the apparatus further includes:
a processing module, configured to determine that a cell other than the cell associated with the second cell discontinuous transmission/reception configuration is associated with the first cell discontinuous transmission/reception configuration.

In an embodiment, the cell discontinuous transmission/reception configuration includes an identifier of the at least one cell associated with the cell discontinuous transmission/reception configuration; and/or, the cell discontinuous transmission/reception configuration includes an identifier of the UE DRX configuration associated with the cell discontinuous transmission/reception configuration.

In an embodiment, cell configuration information of the network device includes at least one of:
information of a cell discontinuous transmission/reception configuration associated with each cell; or
information of UE DRX configuration associated with each cell.

In an embodiment, the UE DRX configuration includes at least one of:
UE connected state-discontinuous reception (C-DRX) configuration per cell; or
UE C-DRX configuration per cell group.

In an embodiment, the transceiver module is further configured to:
receive second indication information transmitted by the network device, wherein the second indication information is used to determine a valid area of the cell discontinuous transmission/reception configuration.

In an embodiment, the second indication information includes at least one of:
an area identifier;
an identifier of at least one cell;
an access network code; or
a tracking area code.

In an embodiment, the cell discontinuous transmission/reception configuration includes the second indication information.

In an embodiment, the transceiver module is further configured to:
receive third indication information transmitted by the network device in response to determining that the UE switches from a first cell to a second cell, wherein the third indication information indicates at least one of:
a difference between the cell discontinuous transmission/reception configuration of the first cell and the cell discontinuous transmission/reception configuration of the second cell;
whether the cell discontinuous transmission/reception configuration of the first cell is consistent with the cell discontinuous transmission/reception configuration of the second cell; or
whether to release the cell discontinuous transmission/reception configuration of the first cell.

In an embodiment, the cell discontinuous transmission/reception configuration at least includes configuration of an inactivity timer;
the transceiver module is further configured to receive start/stop information transmitted by the network device, wherein the start/stop information is used for the UE to start or stop the inactivity timer.

In an embodiment, an identifier of the cell discontinuous transmission/reception configuration is associated with an identifier of the UE DRX configuration.

Embodiments of a fifth aspect of the present disclosure provide a communication system, including a network device and a user equipment (UE), wherein
the network device is configured to perform the information transmission/reception method provided in the first aspect;
the UE is configured to perform the information transmission/reception method provided in the second aspect.

Embodiments of a sixth aspect of the present disclosure provide a communication device, including a processor, a transceiver, a memory, and an executable program that is stored on the memory and can be run by the processor, wherein the processor is configured to perform the information transmission/reception method provided in the first aspect or the second aspect when running the executable program.

Embodiments of a seventh aspect of the present disclosure provide a computer storage medium stored with an executable program, wherein when the executable program is executed by a processor, the information transmission/reception method provided in the first aspect or the second aspect can be implemented.

With the information transmission/reception method and apparatus, communication device, and storage medium provided by the embodiments of the present disclosure, the network device sends at least one set of cell discontinuous transmission/reception configuration to the user equipment (UE), wherein one set of cell discontinuous transmission/reception configuration is associated with at least one cell and/or one UE discontinuous reception (DRX) configuration, wherein the cell discontinuous transmission/reception configuration includes a cell discontinuous transmission (Cell DTX) configuration and/or a cell discontinuous reception (Cell DRX) configuration. Thus, the network device indicates to the UE the cell discontinuous transmission/reception configuration associated with the cell and/or UE DRX configuration, enabling the UE to communicate within the cell based on the cell discontinuous transmission/reception configuration while meeting the UE DRX requirements, thereby achieving cell discontinuous transmission/reception.

The technical solutions provided in the embodiments of the present disclosure should be understood as follows: the general description above and the detailed description below are merely exemplary and explanatory, and shall not be construed as limiting the embodiments of the present disclosure.

### BRIEF DESCRIPTION OF THE DRAWINGS

The accompanying drawings are incorporated herein and constitute a part of this specification, illustrating embodiments consistent with the present disclosure and used together with the specification to explain the principles of the embodiments.
FIG. 1 is a schematic diagram of a wireless communication system illustrated according to an illustrative embodiment.
FIG. 2 is a schematic flowchart of information transmission/reception illustrated according to an illustrative embodiment.
FIG. 3 is a schematic flowchart of information transmission/reception illustrated according to an illustrative embodiment.
FIG. 4 is a schematic diagram of an association relationship illustrated according to an illustrative embodiment.
FIG. 5 is a schematic diagram of an association relationship illustrated according to an illustrative embodiment.
FIG. 6 is a schematic flowchart of information transmission/reception illustrated according to an illustrative embodiment.
FIG. 7 is a schematic flowchart of information transmission/reception illustrated according to an illustrative embodiment.
FIG. 8 is a schematic flowchart of information transmission/reception illustrated according to an illustrative embodiment.
FIG. 9 is a schematic flowchart of information transmission/reception illustrated according to an illustrative embodiment.
FIG. 10 is a schematic flowchart of information transmission/reception illustrated according to an illustrative embodiment.
FIG. 11 is a schematic flowchart of information transmission/reception illustrated according to an illustrative embodiment.
FIG. 12 is a schematic flowchart of information transmission/reception illustrated according to an illustrative embodiment.
FIG. 13 is a schematic flowchart of information transmission/reception illustrated according to an illustrative embodiment.
FIG. 14 is a schematic flowchart of information transmission/reception illustrated according to an illustrative embodiment.
FIG. 15 is a schematic flowchart of information transmission/reception illustrated according to an illustrative embodiment.
FIG. 16 is a schematic flowchart of information transmission/reception illustrated according to an illustrative embodiment.
FIG. 17 is a block diagram of an information transmission/reception apparatus illustrated according to an illustrative embodiment.
FIG. 18 is a block diagram of an information transmission/reception apparatus illustrated according to an illustrative embodiment.
FIG. 19 is a block diagram of a UE illustrated according to an illustrative embodiment.
FIG. 20 is a block diagram of a communication device illustrated according to an illustrative embodiment.

### DETAILED DESCRIPTION

The illustrative embodiments will be described in detail here, with examples shown in the accompanying drawings. When referring to the accompanying drawings, unless otherwise indicated, the same numbers in different drawings represent the same or similar elements. The implementations described in the following illustrative embodiments do not represent all implementations consistent with the embodiments of the present disclosure. On the contrary, they are only examples of apparatuses and methods that are consistent with some aspects of the embodiments of the present disclosure.

Terms used in the embodiments of the present disclosure are only for the purpose of describing specific embodiments, but should not be construed to limit the present disclosure. As used in the embodiments of the present disclosure and the appended claims, "a/an", "said" and "the" in singular forms are intended to include plural forms, unless clearly indicated in the context otherwise. It should also be understood that the term "and/or" used in this article refers to and includes any or all possible combinations of one or more associated listed items.

It should be understood that, although terms such as "first," "second" and "third" may be used in the embodiments of the present disclosure for describing various information, these information should not be limited by these terms. These terms are only used for distinguishing information of the same type from each other. For example, first information may also be referred to as second information, and similarly, the second information may also be referred to as the first information, without departing from the scope of embodiments of the present disclosure. As used herein, the term "if" may be construed to mean "when" or "upon" or "in response to determining" depending on the context.

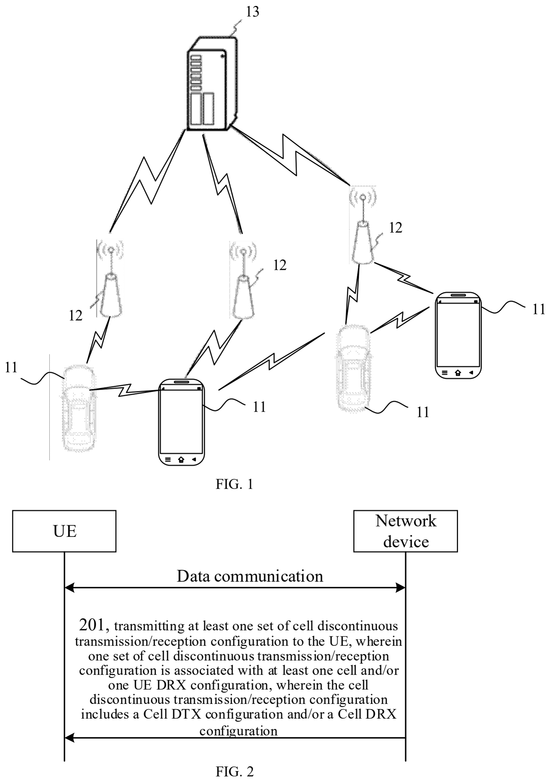

Please refer to FIG. 1, which is a schematic diagram of a wireless communication system provided in an embodiment of the present disclosure. As shown in FIG. 1, the wireless communication system is a communication system based on cellular mobile communication technology, and the wireless communication system may include several UEs 11 and several network devices 12.

The wireless communication system may be a fourth generation mobile communication (4G) system, also known as a Long Term Evolution (LTE) system. Alternatively, the wireless communication system may also be a 5G system, also known as a new radio (NR) system or 5G NR system. Alternatively, the wireless communication system may also be a next-generation system of the 5G system. The access network in the 5G system may be called NG-RAN (New Generation-Radio Access Network). Alternatively, the MTC system.

UE 11 may refer to a device that provides voice and/or data connectivity to users. UE 11 can communicate with one or more core networks via a Radio Access Network (RAN). UE 11 may be an IoT (Internet of Things) UE, such as sensor device, mobile phone (also known as "cellular" phone), and computer with IoT UE, such as fixed, portable, pocket sized, handheld, computer built-in, or vehicle mounted device. For example, UE 11 is a station (STA), a subscriber unit, a subscriber station, a mobile station, a mobile, a remote station, an access point, a remote UE, an access terminal, a user terminal, a user agent, a user device, or a user equipment (UE). Alternatively, UE 11 may also be a device for an unmanned aerial vehicle. Alternatively, UE 11 may also be a vehicle mounted device, such as a wireless communication enabled onboard computer or a wireless communication device connected to an external onboard computer. Alternatively, UE 11 may also be a roadside device, such as a street light, signal light, or other roadside device with wireless communication capabilities.

The network device 12 may include an access network device. Optionally, the network device 12 may also include a core network device. The access network device may be an evolved access device (eNB) used in 4G systems. Alternatively, the access network device may also be an access device (gNB) in the 5G system that adopts a centralized-distributed architecture. When the access network device adopts a centralized-distributed architecture, it usually includes a central unit (CU) and at least two distributed units (DUs). The centralized unit is equipped with protocol stacks for Packet Data Convergence Protocol (PDCP) layer, Radio Link Control (RLC) layer, and Media Access Control (MAC) layer; the physical (PHY) layer protocol stack is set in the distributed unit. The specific implementation of the access network device is not limited in the embodiments of the present disclosure.

A wireless connection can be established between the network device 12 and UE 11 through a wireless air interface. In different implementations, the wireless air interface is based on the fourth generation mobile communication network technology (4G) standard; alternatively, the wireless air interface is based on the fifth generation mobile communication network technology (5G) standard, such as a new air interface; alternatively, the wireless air interface may also be a wireless air interface based on the next-generation mobile communication network technology standard of 5G.

The energy consumption of 5G base stations is four times that of Long Term Evolution (LTE) base stations, so network energy conservation is an important means for operators to reduce the cost of operating 5G systems.

Carrier Aggregation (CA) is a typical method of exchanging bandwidth for rate in Long Term Evolution (LTE) and New Radio (NR). When using CA, there are multiple cells serving User Equipment (UE). There is a distinction between primary and secondary carriers in multiple aggregated carriers in CA. There is only one primary component carrier (PCC), which provides radio resource control (RRC) signaling connections, non-access stratum (NAS) functions, security, etc. PUCCH exists only on PCC. Secondary Component Carrier (SCC) only provides additional wireless resources. PCC and SCC are both referred to as serving cells. The standard also stipulates that the aggregated carriers can support a maximum of 5, which means the maximum bandwidth after aggregation is 100MHz, and the aggregated carriers belong to the same base station. All aggregated carriers use the same Cell-Radio Network Temporary Identifier (C-RNTI), and the base station ensures that the C-RNTI does not conflict in the cell where each carrier is located.

UE does not have the concept of carrier aggregation in RRC idle state. At this time, the UE resides in a cell and initiates RRC connection establishment, adding, deleting, and modifying the required secondary carriers through RRCReconfiguration messages. At this time, the UE obtains the system broadcast message of the primary carrier cell on the primary carrier according to the R9 principle, while the system broadcast information of the secondary carrier cell is notified through the dedicated signaling RRCReconfiguration. For receiving paging messages, UE only listens to paging messages on the primary carrier.

In order to reduce network energy consumption, the network can enter the energy saving mode, namely Network Energy Saving (NES) mode, where the cell periodically does not transmit and/or receive at certain intervals, namely Discontinuous Transmission (DTX)/Discontinuous Reception (DRX).

In the CA scenario, Cell DTX/DRX (cell discontinuous transmission/reception configuration) can be configured according to the carrier. For example, one Cell DTX/DRX is configured in the primary carrier and another Cell DTX/DRX is configured in the secondary carrier.

The entry or exit of a cell into NES mode is determined by UE demand and traffic volume, so it will face configuration changes and cancellations of cell DTX/DRX, and frequent actions will cause an increase in signaling load.

Moreover, in the CA scenario, multiple serving cells share a MAC entity, and each MAC entity is configured with one UE DRX or multiple UE DRX, such as two UE DRX (one for the FR1 serving cell and the other for the FR2 serving cell). Cell DTX/DRX and UE DRX need to be configured correspondingly. How to configure cell DTX/DRX for UE to enable the UE to communicate based on cell DTX/DRX while complying with UE DRX and meeting communication requirements in the CA scenario is an urgent problem to be solved.

As shown in FIG. 2, embodiments of the present disclosure provide an information transmission/reception method. The method is performed by a network device, and includes:
Step 201, transmitting at least one set of cell discontinuous transmission/reception configuration to a user equipment (UE), wherein one set of cell discontinuous transmission/reception configuration is associated with at least one cell and/or one UE DRX configuration, wherein the cell discontinuous transmission/reception configuration includes a cell DTX configuration and/or a cell DRX configuration.

In some other examples, one set of cell discontinuous transmission/reception configuration may also be associated with two or more than two UE DRX configurations, which is not specifically limited in the present disclosure.

In a possible implementation, the network device may be an access network device, or a core network device. Information transmission/reception between the core network device and the UE may be implemented through the access network device.

In a possible implementation, transmitting one set of cell discontinuous transmission/reception configuration to the UE may include: the network device determining to use carrier aggregation (CA) and/or multi-rate dual connectivity (MR-DC) for communication, and transmitting at least one set of cell discontinuous transmission/reception configuration to the UE.

The cell discontinuous transmission/reception configuration may be a configuration which the network device uses for cell discontinuous transmission/reception, and the cell discontinuous transmission/reception may include Cell DTX and/or Cell DRX.

In a possible implementation, the cell discontinuous transmission/reception configuration may be at the cell granularity. For example, each cell can have a corresponding cell discontinuous transmission/reception configuration.

In a possible implementation, the cell discontinuous transmission/reception configuration is carried in at least one of:
a system message; or
an RRC message.

In a possible implementation, the cell discontinuous transmission/reception configuration of different cells may be the same or different.

For example, in the CA scenario, the cell discontinuous transmission/reception configuration of the primary cell (PCell) and the cell discontinuous transmission/reception configuration of the secondary cell (SCell) may be the same.

For example, in the CA scenario, the cell discontinuous transmission/reception configuration of PCell and the cell discontinuous transmission/reception configuration of SCell may be different.

Therefore, the cell discontinuous transmission/reception configuration transmitted by the network device may be associated with at least one cell.

In a possible implementation, the cell discontinuous transmission/reception configuration may indicate at least one cell associated with the cell discontinuous transmission/reception configuration.

In a possible implementation, the network device may send indication information to indicate at least one cell associated with the cell discontinuous transmission/reception configuration.

The network device needs to transmit and/or receive during the on Duration period in Cell DTX and/or Cell DRX configured in the cell discontinuous transmission/reception configuration. UE also needs to receive during the on Duration period in UE DRX configured in the UE DRX configuration. Therefore, the cell discontinuous transmission/reception configuration of the cell needs to correspond to the UE DRX configuration of the UE in order to enable the network device to communicate within the cell.

In a possible implementation, the UE DRX configuration includes UE Connected state-Discontinuous Reception (C-DRX) configuration.

For example, within a cell, the network device and UE need to communicate during the overlap period between the on Duration period of Cell DTX and the on Duration period of UE DRX.

Here, the cell discontinuous transmission/reception configuration is associated with the UE DRX configuration, which may include but is not limited to at least one of the following:
the on Duration period in the cell discontinuous transmission/reception configuration overlaps with the on Duration period in the UE DRX configuration;
the inactivity period in the cell discontinuous transmission/reception configuration overlaps with the inactivity period in the UE DRX configuration;
the opportunity period in the cell discontinuous transmission/reception configuration overlaps with the inactivity opportunity period in the UE DRX configuration.

In an embodiment, an identifier of the cell discontinuous transmission/reception configuration is associated with an identifier of the UE DRX configuration.

Here, the identifier of the cell discontinuous transmission/reception configuration may include but is not limited to an index of the cell discontinuous transmission/reception configuration, and the identifier of the UE DRX configuration may include but is not limited to an index of the UE DRX.

In a possible implementation, an association relationship can be established between the index of the cell discontinuous transmission/reception configuration and the index of UE DRX.

For example, the network device can establish a correspondence between the cell discontinuous transmission/reception configuration and UE DRX in advance, and the correspondence between cell discontinuous transmission/reception configuration and UE DRX can be represented by the index of cell discontinuous transmission/reception configuration and the index of UE DRX.

The correspondence between the identifier of the cell discontinuous transmission/reception configuration and the identifier of the UE DRX configuration may be transmitted by the network device to the UE or specified by the communication protocol.

In a possible implementation, the cell discontinuous transmission/reception configuration indicated by the network device to the UE may be associated with at least one cell.

In a possible implementation, the cell discontinuous transmission/reception configuration indicated by the network device to the UE may be associated with the UE DRX configuration.

In a possible implementation, the cell discontinuous transmission/reception configuration indicated by the network device to the UE may be associated with at least one cell and the UE DRX configuration.

In a possible implementation, different cell discontinuous transmission/reception configurations may be associated with different UE DRX configurations, for example, the first cell discontinuous transmission/reception configuration may be associated with the first UE DRX configuration, and the second cell discontinuous transmission/reception configuration may be associated with the second UE DRX configuration. Thus, it can meet the needs of multiple UE DRX configurations.

For example, in the CA scenario, the first UE DRX configuration of PCell and the second UE DRX configuration of SCell may be different. The network device may send the first cell discontinuous transmission/reception configuration of PCell and the second cell discontinuous transmission/reception configuration of SCell to the UE, where the first cell discontinuous transmission/reception configuration may be associated with the first UE DRX configuration and the second cell discontinuous transmission/reception configuration may be associated with the second UE DRX configuration. Thus, it is possible to achieve cell discontinuous transmission/reception in CA scenarios.

In this way, the network device indicates to the UE the cell discontinuous transmission/reception configuration associated with the cell and/or the UE DRX configuration, enabling the UE to communicate based on the cell discontinuous transmission/reception configuration in the cell and meet the UE DRX, achieving cell discontinuous transmission/reception.

In an embodiment, at least one set of cell discontinuous transmission/reception configuration includes a first cell discontinuous transmission/reception configuration;
transmitting at least one set of cell discontinuous transmission/reception configuration to the UE includes:
transmitting the first cell discontinuous transmission/reception configuration to the UE, wherein the first cell discontinuous transmission/reception configuration is associated with a preset cell, and/or the first cell discontinuous transmission/reception configuration is associated with the first UE DRX configuration.

The preset cell may include all cells or at least one cell.

In an embodiment, the preset cell includes a serving cell of the UE.

In a possible implementation, the serving cell may be the primary serving cell (PCell) and/or the primary secondary serving cell (PScell).

The preset cell may be the cell associated with the first UE DRX configuration. By sending the first cell discontinuous transmission/reception configuration to the cell associated with the first UE DRX configuration, the UE can communicate based on the cell discontinuous transmission/reception configuration in the cell and meet the UE DRX requirements, achieving cell discontinuous transmission/reception.

In an embodiment, at least one set of cell discontinuous transmission/reception configuration further includes a second cell discontinuous transmission/reception configuration;
transmitting at least one set of cell discontinuous transmission/reception configuration to the UE further includes:
transmitting the second cell discontinuous transmission/reception configuration to the UE, wherein the second cell discontinuous transmission/reception configuration is associated with a second UE DRX configuration, and the second UE DRX configuration is different from the first UE DRX configuration.

Here, the first cell discontinuous transmission/reception configuration and the second cell discontinuous transmission/reception configuration are used to distinguish different cell discontinuous transmission/reception configurations, not to limit the number of cell discontinuous transmission/reception configurations. There may be multiple cell discontinuous transmission/reception configurations, such as two or more than two. Similarly, the first UE DRX configuration and the second UE DRX configuration are used to distinguish different UE DRX configurations, not to limit the number of UE DRX configurations, and there may be multiple UE DRX configurations, such as two or more than two.

In a possible implementation, the first cell discontinuous transmission/reception configuration may be carried in the system message, and the second cell discontinuous transmission/reception configuration may be carried in a dedicated signaling, such as an RRC message.

The network device broadcasts the first cell discontinuous transmission/reception configuration associated with the preset cell to the UE through the system message.

In a possible implementation, the preset cell may be determined based on the UE DRX configuration of the cell. For example, if all cells associated with the network device adopt the same UE DRX configuration, then the preset cell may include all the cells. If all the cells associated with the network device are associated with multiple UE DRX configurations, then the preset cell may include the cell corresponding to the UE DRX configuration associated with the first cell discontinuous transmission/reception configuration.

In a possible implementation, the first cell discontinuous transmission/reception configuration may be the default cell discontinuous transmission/reception configuration.

As an example, the first cell discontinuous transmission/reception configuration may be associated with all cells by default. Alternatively, the first cell discontinuous transmission/reception configuration may be indicated by a bitmap to indicate one or more associated cells.

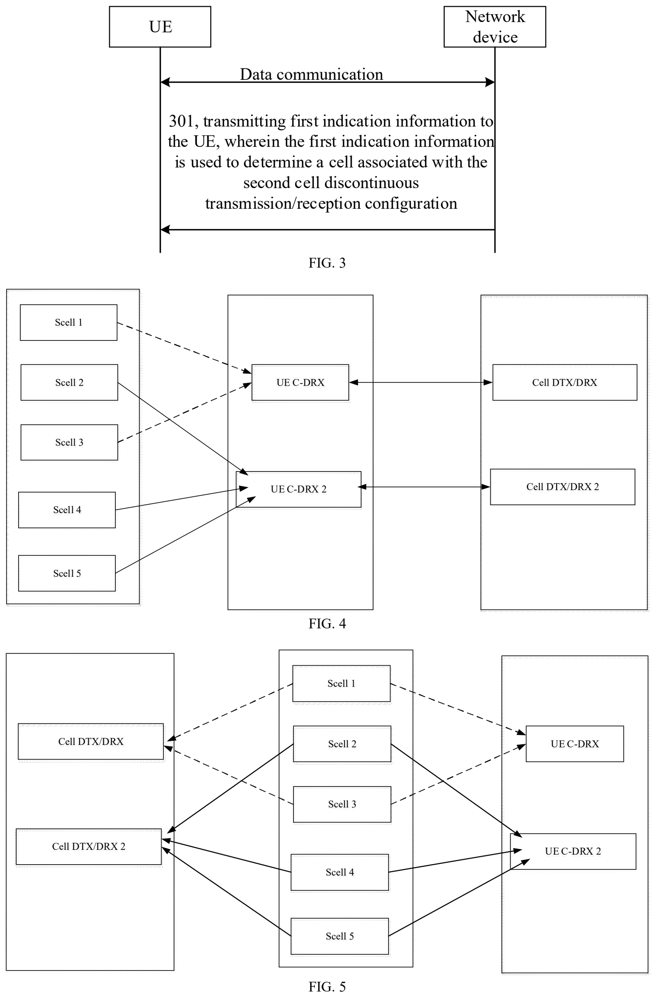

As shown in FIG. 3, embodiments of the present disclosure provide an information transmission/reception method. The method is performed by a network device, and includes:
Step 301, transmitting first indication information to the UE, wherein the first indication information is used to determine a cell associated with the second cell discontinuous transmission/reception configuration.

In a possible implementation, for scenarios where multiple UE DRX configurations are configured, such as two UE DRX configurations, the access network device can configure the second cell discontinuous transmission/reception configuration associated with the second UE DRX configuration. The first indication information can be used to indicate the cell associated with the second cell discontinuous transmission/reception configuration.

In a possible implementation, the first cell discontinuous transmission/reception configuration may be associated with SPCell or SCell, and the second cell discontinuous transmission/reception configuration may be associated with SCell. For example, for two configured UE DRX configurations (the first UE DRX configuration is used for the FR1 serving cell, and the second UE DRX configuration is used for the FR2 serving cell), the first cell discontinuous transmission/reception configuration may be associated with the SPCell of FR1, and the second cell discontinuous transmission/reception configuration may be associated with the SCell of FR2.

In a possible implementation, the first indication information may include a bitmap. Each bit in the bitmap may correspond to a cell, which may use "1" to indicate that the cell is associated with the second cell discontinuous transmission/reception configuration, and "0" to indicate that the cell is not associated with the second cell discontinuous transmission/reception configuration.

In an embodiment, the first indication information is carried in the second cell discontinuous transmission/reception configuration.

The first indication information may be sent separately to the UE by the network device, or carried in the second cell discontinuous transmission/reception configuration and sent to the UE.

In this way, with the cell discontinuous transmission/reception configurations, different cell discontinuous transmission/reception configurations can be configured for different cells to meet the UE DRX configuration requirements in different cells. It meets the requirement of configuring different cell discontinuous transmission/reception configurations for different cells in CA scenarios, while also being able to adapt to UE DRX configurations of different cells.

In an embodiment, the UE determines that the cell other than the cell associated with the second cell discontinuous transmission/reception configuration is associated with the first cell discontinuous transmission/reception configuration.

In a possible implementation, the cells determined based on the first indication information that are not associated with the second cell discontinuous transmission/reception configuration may be determined by default to be associated with the first cell discontinuous transmission/reception configuration.

In a possible implementation, the cells associated with the first cell discontinuous transmission/reception configuration or the second cell discontinuous transmission/reception configuration may include but are not limited to: cells, cell groups. The cell group includes one or more cells.

The cell discontinuous transmission/reception configuration may be associated with a cell identifier and/or a cell group identifier. The cell identifier may include a cell index. The cell group identifier may include a cell group index.

In a possible implementation, the first cell discontinuous transmission/reception configuration may be associated with the first part of all cells, and the second cell discontinuous transmission/reception configuration may be associated with the second part of all cells. Here, the first part of cells are associated with the first UE DRX configuration, and the second part of cells are associated with the second UE DRX configuration.

In a possible implementation, cell association with UE DRX configuration includes: in the cell, communication is based at least on the UE DRX configuration.

In a possible implementation, cell association with the cell discontinuous transmission/reception configuration includes: in the cell, communication is based at least on the cell discontinuous transmission/reception configuration.

For example, the first cell discontinuous transmission/reception configuration may be obtained through system broadcasting, and the UE may obtain the first cell discontinuous transmission/reception configuration from the system broadcasting of a special cell (SPCell) as the default cell discontinuous transmission/reception (referred to as cell DTX/DRX) configuration, with a default index of 0. That is, it is defaulted that the cell discontinuous transmission/reception configuration of all serving cells on the network side is set as the first cell discontinuous transmission/reception configuration. Moreover, the first cell discontinuous transmission/reception configuration is associated with the first UE DRX configuration. Here, the first UE DRX configuration may be the UE DRX configuration of all serving cells.

If multiple UE DRX configurations are configured on the network side through the RRC dedicated signaling, such as two UE DRX configurations (one for FR1 serving cell and the other for FR2 serving cell), then the second cell discontinuous transmission/reception configuration, as well as the serving cell and/or serving cell group associated with the second cell discontinuous transmission/reception configuration can be configured through the RRC dedicated signaling.

The serving cell group associated with the second cell discontinuous transmission/reception configuration can be represented by a serving cell index or a SCell index list, or by a bitmap, where the bit corresponding to the serving cell in the bitmap is set to 1, indicating that the corresponding serving cell belongs to the second cell discontinuous transmission/reception configuration. Each bit in the bitmap can correspond one-to-one with a serving cell or SCell. Other serving cells that are not associated with the second cell discontinuous transmission/reception configuration default to being associated with the first cell discontinuous transmission/reception configuration.

Furthermore, the network device may also configure the association relationship between cell discontinuous transmission/reception configuration and UE DRX, that is, the UE DRX associated with cell discontinuous transmission/reception configuration or the cell discontinuous transmission/reception configuration associated with UE DRX. The association may be performed through association indexing, that is, establishing a correspondence relationship between UE DRX index and cell discontinuous transmission/reception configuration index.

In an embodiment, cell configuration information of the network device includes at least one of:
information of a cell discontinuous transmission/reception configuration associated with each cell; or
information of UE DRX configuration associated with each cell.

The cell configuration information may indicate at least one of the cell identifier or cell resource configuration.

The cell configuration information may indicate the cell discontinuous transmission/reception configuration and/or UE DRX configuration associated with the cell. For example, the cell configuration information may indicate the index of the cell discontinuous transmission/reception configuration and/or the index of the UE DRX configuration associated with the cell.

In a possible implementation, the information of the cell discontinuous transmission/reception configuration associated with each cell may indicate the identifier of the cell discontinuous transmission/reception configuration and/or the cell discontinuous transmission/reception configuration.

In a possible implementation, the information of the UE DRX configuration associated with each cell may indicate the identifier of the UE DRX configuration, and/or the UE DRX configuration.

The cell configuration information may also indicate whether the cell is associated with a specific cell discontinuous transmission/reception configuration and/or UE DRX configuration. For example, the cell configuration information may indicate whether it is associated with an index of a specific cell discontinuous transmission/reception configuration and/or an index of a specific UE DRX configuration.

In a possible implementation, as shown in FIG. 4, the association between the cell discontinuous transmission/reception configuration (represented by Cell DTX/DRX in FIG. 4) and the UE DRX configuration (represented by UE C-DRX in FIG. 4) can be pre-configured. Therefore, based on the cell configuration information, the cell discontinuous transmission/reception configuration or UE DRX configuration associated with the cell (represented by SCell in FIG. 4) can be determined respectively.

In a possible implementation, as shown in FIG. 5, the cell configuration information may indicate the cell discontinuous transmission/reception configuration (represented by Cell DTX/DRX in FIG. 5) and UE DRX configuration (represented by UE C-DRX in FIG. 5) associated with the cell (represented by SCell in FIG. 5).

For example, when configuring SCells, each SCell is associated with a cell discontinuous transmission/reception configuration index in its configuration (such as the index of the first cell discontinuous transmission/reception configuration or the index of the second cell discontinuous transmission/reception configuration). Alternatively, the configuration of each SCell may carry indication information of whether it is associated with the second cell discontinuous transmission/reception configuration. If the indication is yes, then the SCell is associated with the second cell discontinuous transmission/reception configuration.

For example, when configuring SCells, if each SCell configuration is associated with the second UE DRX, then based on the second cell discontinuous transmission/reception configuration associated with the second UE DRX, the SCell is determined by default to be associated with the second cell discontinuous transmission/reception configuration.

In an embodiment, transmitting the first cell discontinuous transmission/reception configuration to the UE includes:
transmitting the first cell discontinuous transmission/reception configuration to the UE in a first frequency band.

In an embodiment, transmitting the second cell discontinuous transmission/reception configuration to the UE includes:
transmitting the second cell discontinuous transmission/reception configuration to the UE in a second frequency band.

In the CA scenario, each MAC entity may be configured with one UE DRX or multiple UE DRX, such as two UE DRX, and use different UE DRX configurations in different frequency bands. Different frequency bands may include FR1 and FR2.

For example, the first frequency band may be FR1, and the second frequency band may be FR2.

In a possible implementation, the first cell discontinuous transmission/reception configuration may be carried in a system message within the first frequency band and broadcasted by the network device to the UE.

In a possible implementation, the second cell discontinuous transmission/reception configuration may be carried in a system message within the second frequency band and broadcasted by the network device to the UE.

In a possible implementation, the cell discontinuous transmission/reception configuration received in a frequency band is associated with the cell operating in that band.

For example, the network side configures multiple UE DRX configurations via the RRC dedicated signaling, such as two UE DRX configurations (one for the FR1 serving cell and another for the FR2 serving cell). The PCell belongs to FR1, and the SCell belongs to FR2.

The UE can determine that all FR1 serving cells are associated with the first cell discontinuous transmission/reception configuration obtained on the Pcell, and meanwhile the first cell discontinuous transmission/reception configuration has an association relationship with the UE DRX configuration of FR1. FR2 serving cells are associated with the second cell discontinuous transmission/reception configuration obtained on the FR2 SCell, and meanwhile the second cell discontinuous transmission/reception configuration is correlated with the UE DRX configuration of FR2.

In a possible implementation, the network device may send configuration information to the UE within the cell, wherein the configuration information can indicate the index of the cell discontinuous transmission/reception configuration of the cell.

For example, the network device can configure an SCell index to indicate UE to obtain the cell discontinuous transmission/reception configuration on the system broadcast of the SCell.

In an embodiment, the cell configuration information of the second frequency band cell is used to determine at least one of:
the cell discontinuous transmission/reception configuration associated with the second frequency band cell;
   or,
UE DRX configuration associated with the second frequency band cell;
wherein, different cell discontinuous transmission/reception configurations are associated with different UE DRX configurations.

The cell configuration information may be used to indicate one of the following: cell identifier, cell resource configuration.

The cell configuration information may indicate the cell discontinuous transmission/reception configuration and/or UE DRX configuration associated with the cell. For example, the cell configuration information may indicate the index of the cell discontinuous transmission/reception configuration and/or the index of the UE DRX configuration associated with the cell.

The cell configuration information may also indicate whether the cell is associated with a specific cell discontinuous transmission/reception configuration and/or UE DRX configuration. For example, the cell configuration information may indicate whether the cell is associated with an index of a specific cell discontinuous transmission/reception configuration and/or an index of a specific UE DRX configuration.

In a possible implementation, the association relationship between the cell discontinuous transmission/reception configuration and the UE DRX configuration can be pre-configured. Therefore, after determining the cell discontinuous transmission/reception configuration or UE DRX configuration associated with the cell based on the cell configuration information, the UE DRX configuration or cell discontinuous transmission/reception configuration associated with the cell can be determined respectively.

For example, when configuring SCells in the second frequency band, each SCell is associated with a cell discontinuous transmission/reception configuration index in its configuration (such as the index of the first cell discontinuous transmission/reception configuration or the index of the second cell discontinuous transmission/reception configuration). Alternatively, the configuration of each SCell may carry indication information of whether it is associated with the second cell discontinuous transmission/reception configuration. If the indication is yes, then the SCell is associated with the second cell discontinuous transmission/reception configuration.

For example, when configuring SCells within the second frequency band, if each SCell configuration is associated with a second UE DRX, then based on the second cell discontinuous transmission/reception configuration associated with the second UE DRX, the SCell is defaulted to be associated with the second cell discontinuous transmission/reception configuration.

In this way, by configuring multiple cell discontinuous transmission/reception configurations, different cell discontinuous transmission/reception configurations are configured for cells in different frequency bands to meet the UE DRX configuration requirements in different frequency bands. It meets the requirement of configuring different cell discontinuous transmission/reception configurations for different frequency band cells in CA scenarios, while also being able to adapt to UE DRX configurations for different frequency band cells.

In an embodiment, the cell discontinuous transmission/reception configuration includes the identifier of at least one cell associated with the cell discontinuous transmission/reception configuration; and/or, the cell discontinuous transmission/reception configuration includes the identifier of the UE DRX configuration associated with the cell discontinuous transmission/reception configuration.

In a possible implementation, the cell discontinuous transmission/reception configuration may be carried in a dedicated signaling and sent to the UE. For example, the cell discontinuous transmission/reception configuration may be carried in an RRC message and sent to the UE.

In a possible implementation, the cell discontinuous transmission/reception configuration may indicate the identifier of the cell associated with the cell discontinuous transmission/reception configuration, such as the cell index.

In a possible implementation, the cell discontinuous transmission/reception configuration may be used to determine the cell group associated with the cell discontinuous transmission/reception configuration.

In a possible implementation, the cell discontinuous transmission/reception configuration may indicate the identifier of the cell group associated with the cell discontinuous transmission/reception configuration, such as the cell group index.

In a possible implementation, the first indication information may carry a bitmap. Each bit in the bitmap may correspond to a cell and/or cell group, which can use "1" to indicate that the cell and/or cell group is associated with the cell discontinuous transmission/reception configuration, and "0" to indicate that the cell and/or cell group is not associated with the cell discontinuous transmission/reception configuration.

In a possible implementation, the cell discontinuous transmission/reception configuration may indicate the identifier of the UE DRX configuration associated with the cell discontinuous transmission/reception configuration. The identifier of the UE DRX configuration may include but is not limited to the index of UE DRX.

For example, the cell discontinuous transmission/reception configuration of the cell may indicate the cell discontinuous transmission/reception configuration and the identifier of the UE DRX configuration, which indicates that the cell discontinuous transmission/reception configuration is associated with the UE DRX configuration identified by the identifier of the UE DRX configuration.

In a possible implementation, the network device may send N sets of cell discontinuous transmission/reception configurations, as well as the cell and/or UE DRX configuration associated with each cell discontinuous transmission/reception configuration. N is a positive integer greater than 1.

For example, if the cell discontinuous transmission/reception configuration is obtained through the RRC dedicated signaling, the RRC signaling also configures the cell group and/or UE DRX configuration associated with the cell discontinuous transmission/reception configuration.

The cell group associated with the cell discontinuous transmission/reception configuration is represented by the serving cell index or SCell index list. The cell group associated with the cell discontinuous transmission/reception configuration may also be represented by a bitmap, where the corresponding bit in the bitmap is set to 1 to indicate that the corresponding serving cell is associated with the cell discontinuous transmission/reception configuration. Each bit in the bitmap corresponds one-to-one to a serving cell or SCell.

For the associated UE DRX configuration, the association relationship can be represented by configuring the UE DRX configuration index in the cell discontinuous transmission/reception configuration.

In an embodiment, the UE DRX configuration includes at least one of:
UE connected state-discontinuous reception (C-DRX) configuration per cell; or
UE C-DRX configuration per cell group.

The cell discontinuous transmission/reception configuration may be at the cell granularity or at the cell group granularity. Different cells or cell groups may have different cell discontinuous transmission/reception configurations. To adapt to the cell discontinuous transmission/reception configuration per cell or per cell group, the UE DRX configuration may also be per cell or per cell group granularity, so as to achieve matching of transmission/reception between the access network device and the UE within the cell or cell group. For example, both the cell and UE need to be within the on Duration period, in order to communicate.

For example, in the CA scenario, multiple serving cells share a MAC entity, and each MAC entity is configured with one UE DRX or two UE DRX (one for the FR1 serving cell and the other for the FR2 serving cell). The Cell DTX/DRX is configured at the Cell granularity. In order to better save energy on the network side, it is necessary to overlap the active time period of Cell DTX and the active time period of UE C-DRX as much as possible. For this purpose, the network side can configure UE C-DRX according to the serving cell granularity or serving cell group granularity, that is, the network side can configure multiple UE C-DRX configurations, and each UE C-DRX configuration is associated with a serving cell or a serving cell group. When there is dynamic scheduling or retransmission scheduling in a certain serving cell, only the DRX timer of the UE C-DRX corresponding to that serving cell is affected. The DRX timer includes: drx-InactivityTimer, drx-RetransmissionTimerDL, drx-RetransmissionTimerUL, drx-HARQ-RTT-TimerDL, drx-HARQ-RTT-TimerUL, etc.

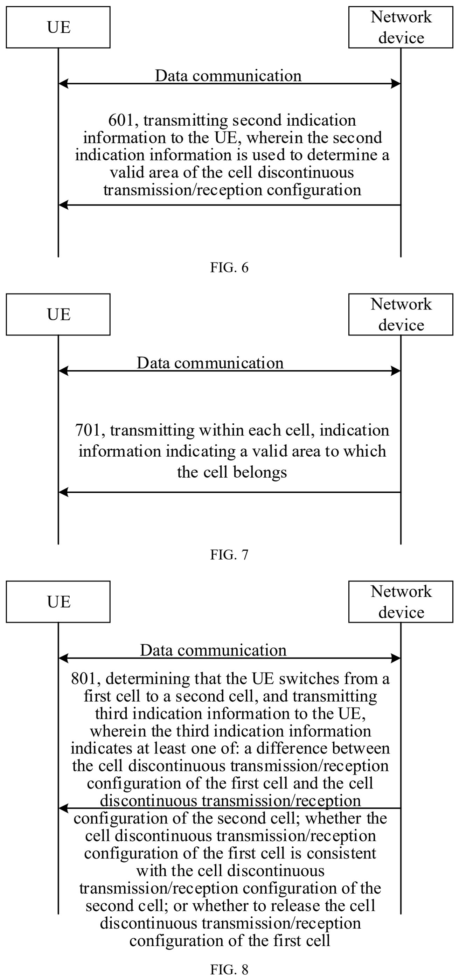

As shown in FIG. 6, embodiments of the present disclosure provide an information transmission/reception method. The method is performed by a network device, and includes:
Step 601, transmitting second indication information to the UE, wherein the second indication information is used to determine a valid area of the cell discontinuous transmission/reception configuration.

In a possible implementation, the second indication information may indicate at least one of:
geographic location information of the valid area, such as geographic coordinate location information;
network location information of the valid area; one or more cell information.

In a possible implementation, the valid area may include at least one of:
one or more cells;
one or more access network coverage areas; or
a tracking area.

In a possible implementation, the UE may determine whether it is located in the valid area of the cell discontinuous transmission/reception configuration based on its current location information and the valid area, and then confirm whether to use the cell discontinuous transmission/reception configuration.

For example, if the UE determines that it is currently located within the valid area, it uses the cell discontinuous transmission/reception configuration associated with the valid area. Otherwise, the UE does not use the cell discontinuous transmission/reception configuration associated with the valid area.

For example, the cell discontinuous transmission/reception configuration is configured based on the valid area, that is, within a range of the valid area, the cell discontinuous transmission/reception configuration is the same.

The UE may determine whether to change the cell discontinuous transmission/reception configuration based on the valid area, rather than being limited to determining whether to change the cell discontinuous transmission/reception configuration based on the cell, improving the flexibility of determining whether to change the cell discontinuous transmission/reception configuration.

In an embodiment, the cell discontinuous transmission/reception configuration includes the second indication information.

The valid area of the cell discontinuous transmission/reception configuration may be carried in the second indication information of the cell discontinuous transmission/reception configuration.

In an embodiment, the second indication information includes at least one of:
an area identifier;
an identifier of at least one cell;
an access network code; or
a tracking area code.

The area identifier may be used to identify a pre-designated area.

In a possible implementation, there may be multiple identifiers of cells, multiple access network codes, and/or multiple tracking area codes, i.e. indicated in the form of a list.

For example, if the cell discontinuous transmission/reception configuration is configured through system broadcasting, the second information of the cell discontinuous transmission/reception configuration may indicate the area identifier of the valid area, the list of cell identifiers associated with the valid area, the list of access network codes associated with the valid area, or the list of tracking area codes associated with the valid area, etc. If it is the area identifier, the area identifier may be systemInformationAreaID or a newly defined area identifier, indicating the valid area range of the cell discontinuous transmission/reception configuration.

In a possible implementation, the area identifier may be an integer value.

For another example, if the cell discontinuous transmission/reception configuration is configured through the dedicated signaling, a valid area associated with the cell discontinuous transmission/reception configuration may also be configured. The second information may indicate the area identifier of the valid area, the list of cell identifiers associated with the valid area, the list of access network codes associated with the valid area, or the list of tracking area codes associated with the valid area, etc. If it is the area identifier, the area identifier may be systemInformationAreaID or a newly defined area identifier, indicating the valid area range of the cell discontinuous transmission/reception configuration.

The UE determines whether the serving cell belongs to the valid area and whether to continue using the cell discontinuous transmission/reception configuration associated with the valid area.

As shown in FIG. 7, embodiments of the present disclosure provide an information transmission/reception method. The method is performed by a network device, and includes:
Step 701, transmitting within each cell, indication information indicating a valid area where the cell is located.

The cell may broadcast the indication information of the corresponding valid area, for example, the access network device may broadcast the area identifier of the valid area to which the cell belongs within the cell. After the UE switches to another cell, the area identifier broadcasted by the target cell is compared with the already stored area identifier corresponding to the cell discontinuous transmission/reception configuration. If they are the same, it means that the cell discontinuous transmission/reception configuration of the target cell is the same as the stored cell discontinuous transmission/reception configuration. If they are different, it means that the cell discontinuous transmission/reception configuration of the target cell is different from the stored cell discontinuous transmission/reception configuration, and the current stored cell discontinuous transmission/reception configuration needs to be updated.

The UE may determine whether to change the cell discontinuous transmission/reception configuration based on the valid area, rather than being limited to determining whether to change the cell discontinuous transmission/reception configuration based on the cell, improving the flexibility of determining whether to change the cell discontinuous transmission/reception configuration.

As shown in FIG. 8, embodiments of the present disclosure provide an information transmission/reception method. The method is performed by a network device, and includes:

Step 801, determining that the UE switches from a first cell to a second cell, transmitting third indication information to the UE, wherein the third indication information indicates at least one of:
a difference between the cell discontinuous transmission/reception configuration of the first cell and the cell discontinuous transmission/reception configuration of the second cell;
whether the cell discontinuous transmission/reception configuration of the first cell is consistent with the cell discontinuous transmission/reception configuration of the second cell; or
whether to release the cell discontinuous transmission/reception configuration of the first cell.

When the UE switches from the first cell to the second cell, the cell discontinuous transmission/reception configuration used by the UE in the second cell may be determined based on the third indication information received in the second cell.

The third indication information received within the second cell may indicate the difference between the cell discontinuous transmission/reception configuration used in the first cell and the cell discontinuous transmission/reception configuration used in the second cell. The UE may obtain the cell discontinuous transmission/reception configuration used in the second cell based on the cell discontinuous transmission/reception configuration used in the first cell and the difference.

The third indication information received in the second cell may indicate whether the cell discontinuous transmission/reception configuration used in the first cell is consistent with the cell discontinuous transmission/reception configuration used in the second cell. If they are consistent, the UE will continue to use the cell discontinuous transmission/reception configuration used in the first cell in the second cell. If there is inconsistency, the UE may determine the cell discontinuous transmission/reception configuration used in the second cell.

The third indication information received within the second cell may indicate whether the UE needs to release the cell discontinuous transmission/reception configuration used in the first cell. If the indication information indicates that the UE needs to release the cell discontinuous transmission/reception configuration used in the first cell, the UE may release the cell discontinuous transmission/reception configuration used in the first cell and obtain the cell discontinuous transmission/reception configuration used in the second cell.

In a possible implementation, the third indication information indicates whether the UE needs to release the cell discontinuous transmission/reception configuration used in the first cell, implicitly indicating whether the cell discontinuous transmission/reception configuration of the first cell is the same as that of the second cell.

Here, the first cell may be the current serving cell of the UE, and the second cell may be the target cell for the UE to switch to.

For example, if the cell discontinuous transmission/reception configuration is configured through the dedicated signaling, the dedicated signaling of the target cell can configure the cell discontinuous transmission/reception configuration of the target cell in the form of third indication information indicating the difference. For example, if the target cell is not configured with a cell discontinuous transmission/reception configuration, it means that the cell discontinuous transmission/reception configuration of the target cell is the same as the cell discontinuous transmission/reception configuration used by the UE before switching cells (i.e., the first cell discontinuous transmission/reception configuration).

For example, the cell discontinuous transmission/reception configuration may be configured through the system message or dedicated signaling. When the UE switches to another cell (target cell), the target cell uses an explicit indication in the dedicated signaling to indicate whether the cell discontinuous transmission/reception configuration is the same as that before the switch, or whether to release the previous configuration.

The network device may directly indicate to the UE whether to change the cell discontinuous transmission/reception configuration through the third indication information, improving the flexibility of UE to determine whether to change the cell discontinuous transmission/reception configuration.

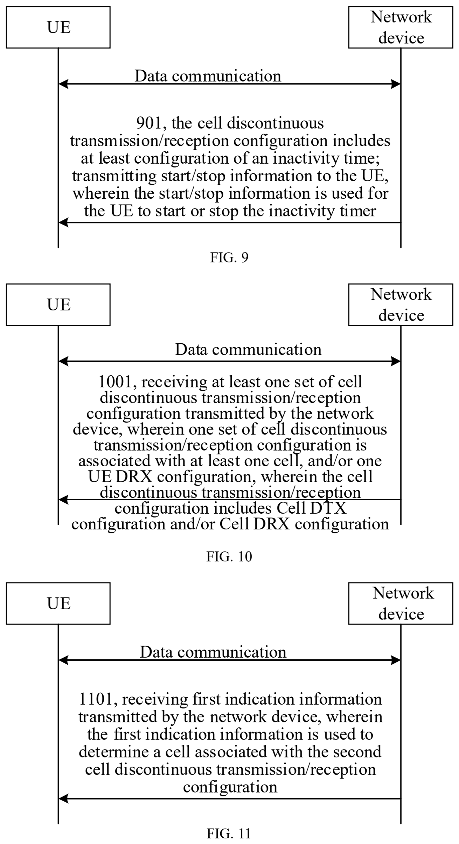

As shown in FIG. 9, embodiments of the present disclosure provide an information transmission/reception method. The method is performed by a network device, and includes:
Step 901, the cell discontinuous transmission/reception configuration at least includes configuration of an inactivity timer; transmitting start/stop information to the UE, wherein the start/stop information is used for the UE to start or stop the inactivity timer.

In a possible implementation, the start/stop information explicitly indicates whether to start or stop the inactivity timer. For example, the start/stop information may occupy 1 bit, with "1" indicating the start of the inactivity timer and "0" indicating the stop of the inactivity timer.

In a possible implementation, the start/stop information implicitly indicates whether to start or stop the inactivity timer. For example, if the logical channel (LC) configured by the network device is associated with an inactivity timer, it means that the inactivity timer for that LC is to be started.

The cell discontinuous transmission/reception configuration may include: cell discontinuous transmission (cell DTX) configuration and/or cell discontinuous reception (cell DRX) configuration.

Here, the inactivity timer may include a transmission inactivity timer in the Cell DTX configuration and/or a reception inactivity timer in the Cell DRX configuration.

The cell discontinuous transmission/reception configuration may include at least one of: period, offset, and on duration. Moreover, the cell discontinuous transmission/reception configuration may also include inactivity timer configuration.

The inactivity timer is used to time the inactivity period after the on duration period in DTX and/or DRX. During the inactivity period, the network device and UE may remain active for communication.

In a possible implementation, the start/stop information may be carried by, but is not limited to, at least one of:

Downlink Control Information (DCI);
the RRC message; or
a transport Block (TB).

In a possible implementation, the inactivity timer may be at the granularity of Semi-Persistent Scheduling (SPS).

In a possible implementation, the inactivity timer may be at the configured grant (CG) granularity.

In a possible implementation, the deactivation timer can be at the logical channel (LC) granularity.

In a possible implementation, the inactivity timer can be at the Logical Channel Group (LCG) granularity.

In a possible implementation, the start/stop information may indicate the start or stop of the inactivity time at the SPS granularity and/or the inactivity timer at the LC granularity.

For example, in the downlink (DL) scenario, i.e. cell DTX, when the UE receives the scheduling information DCI, the DCI indicates whether to start the inactivity timer. For SPS, whether to start the inactivity timer after receiving business is configured at the SPS granularity. Alternatively, the RRC signaling can configure the inactivity timer or configure the indication of whether to start the inactivity timer at the granularity of Logical Channel Identity (LCID) or Logical Channel Group Identity (LCGID). If the LCG where the LCID or LCGID contained in the TB received by the UE is located is associated with an inactivity timer or associated with an indication of starting an inactivity timer, the inactivity timer is started.

For example, in the uplink (UL) scenario, i.e. cell DRX, when the UE receives the scheduling information DCI, the DCI indicates whether to start the inactivity timer. For CG, whether to start the inactivity timer after sending business is configured at the CG granularity. Alternatively, the RRC signaling can configure the inactivity timer or configure the indication of whether to start the inactivity timer at the granularity of Logical Channel Identity (LCID) or Logical Channel Group Identity (LCGID). If the LCG where the LCID or LCGID contained in the TB sent by the UE is located is associated with an inactivity timer or associated with an indication of starting an inactivity timer, the inactivity timer is started.

The network device instructs the UE to start or stop the inactivity timer through the start/stop information, no longer limited to the fixed mode of configuring the inactivity time or enabling the inactivity timer, which improves the flexibility of inactivity timer control.

As shown in FIG. 10, embodiments of the present disclosure provide an information transmission/reception method. The method is performed by a user equipment (UE), and includes:
Step 1001, receiving at least one set of cell discontinuous transmission/reception configuration transmitted by a network device, wherein one set of cell discontinuous transmission/reception configuration is associated with at least one cell and/or one UE DRX configuration, wherein the cell discontinuous transmission/reception configuration includes a cell DTX configuration and/or a cell DRX configuration.

In a possible implementation, the network device may be an access network device, or a core network device. Information transmission/reception between the core network device and the UE may be implemented through the access network device.

In a possible implementation, transmitting one set of cell discontinuous transmission/reception configuration to the UE may include: the network device determining to use carrier aggregation (CA) and/or multi-rate dual connectivity (MR-DC) for communication, and transmitting at least one set of cell discontinuous transmission/reception configuration to the UE.

The cell discontinuous transmission/reception configuration may be a configuration which the network device uses for cell discontinuous transmission/reception, and the cell discontinuous transmission/reception may include Cell DTX and/or Cell DRX.

In a possible implementation, the cell discontinuous transmission/reception configuration may be at the cell granularity. For example, each cell may have a corresponding cell discontinuous transmission/reception configuration.

In a possible implementation, the cell discontinuous transmission/reception configuration is carried in at least one of:
a system message; or
an RRC message.

In a possible implementation, the cell discontinuous transmission/reception configuration of different cells may be the same or different.

For example, in the CA scenario, the cell discontinuous transmission/reception configuration of the primary cell (PCell) and the cell discontinuous transmission/reception configuration of the secondary cell (SCell) may be the same.

For example, in the CA scenario, the cell discontinuous transmission/reception configuration of PCell and the cell discontinuous transmission/reception configuration of SCell may be different.

Therefore, the cell discontinuous transmission/reception configuration transmitted by the network device may be associated with at least one cell.

In a possible implementation, the cell discontinuous transmission/reception configuration may indicate at least one cell associated with the cell discontinuous transmission/reception configuration.

In a possible implementation, the network device may send indication information to indicate at least one cell associated with the cell discontinuous transmission/reception configuration.

The network device needs to transmit and/or receive during the on Duration period in Cell DTX and/or Cell DRX configured in the cell discontinuous transmission/reception configuration. UE also needs to receive during the on Duration period in UE DRX configured in the UE DRX configuration. Therefore, the cell discontinuous transmission/reception configuration of the cell needs to correspond to the UE DRX configuration of the UE in order to enable the network device to communicate within the cell.

In a possible implementation, the UE DRX configuration includes UE Connected state-Discontinuous Reception (C-DRX) configuration.

For example, within a cell, the network device and UE need to communicate during the overlap period between the on Duration period of Cell DTX and the on Duration period of UE DRX.

Here, the cell discontinuous transmission/reception configuration is associated with the UE DRX configuration, which may include but is not limited to at least one of the following:
the on Duration period in the cell discontinuous transmission/reception configuration overlaps with the on Duration period in the UE DRX configuration;
the inactivity period in the cell discontinuous transmission/reception configuration overlaps with the inactivity period in the UE DRX configuration;
the opportunity period in the cell discontinuous transmission/reception configuration overlaps with the inactivity opportunity period in the UE DRX configuration.

In an embodiment, an identifier of the cell discontinuous transmission/reception configuration is associated with an identifier of the UE DRX configuration.

Here, the identifier of the cell discontinuous transmission/reception configuration may include but is not limited to an index of the cell discontinuous transmission/reception configuration, and the identifier of the UE DRX configuration may include but is not limited to an index of the UE DRX.

In a possible implementation, an association relationship can be established between the index of the cell discontinuous transmission/reception configuration and the index of UE DRX.

For example, the network device can establish a correspondence between the cell discontinuous transmission/reception configuration and UE DRX in advance, and the correspondence between cell discontinuous transmission/reception configuration and UE DRX can be represented by the index of cell discontinuous transmission/reception configuration and the index of UE DRX.

The correspondence between the identifier of the cell discontinuous transmission/reception configuration and the identifier of the UE DRX configuration may be transmitted by the network device to the UE or specified by the communication protocol.

In a possible implementation, the cell discontinuous transmission/reception configuration indicated by the network device to the UE may be associated with at least one cell.

In a possible implementation, the cell discontinuous transmission/reception configuration indicated by the network device to the UE may be associated with the UE DRX configuration.

In a possible implementation, the cell discontinuous transmission/reception configuration indicated by the network device to the UE may be associated with at least one cell and the UE DRX configuration.

In a possible implementation, different cell discontinuous transmission/reception configurations may be associated with different UE DRX configurations, for example, the first cell discontinuous transmission/reception configuration may be associated with the first UE DRX configuration, and the second cell discontinuous transmission/reception configuration may be associated with the second UE DRX configuration. Thus, it can meet the needs of multiple UE DRX configurations.

For example, in the CA scenario, the first UE DRX configuration of PCell and the second UE DRX configuration of SCell may be different. The network device may send the first cell discontinuous transmission/reception configuration of PCell and the second cell discontinuous transmission/reception configuration of SCell to the UE, where the first cell discontinuous transmission/reception configuration may be associated with the first UE DRX configuration and the second cell discontinuous transmission/reception configuration may be associated with the second UE DRX configuration. Thus, it is possible to achieve cell discontinuous transmission/reception in CA scenarios.

In this way, the network device indicates to the UE the cell discontinuous transmission/reception configuration associated with the cell and/or the UE DRX configuration, enabling the UE to communicate based on the cell discontinuous transmission/reception configuration in the cell and meet the UE DRX, achieving cell discontinuous transmission/reception.

In an embodiment, at least one set of cell discontinuous transmission/reception configuration includes a first cell discontinuous transmission/reception configuration;
receiving at least one set of cell discontinuous transmission/reception configuration transmitted by the network device includes:
receiving the first cell discontinuous transmission/reception configuration transmitted by the network device, wherein the first cell discontinuous transmission/reception configuration is associated with a preset cell, and/or the first cell discontinuous transmission/reception configuration is associated with the first UE DRX configuration.

The preset cell may include all cells or at least one cell.

In an embodiment, the preset cell includes a serving cell of the UE.

In a possible implementation, the serving cell may be the primary serving cell (PCell) and/or the primary secondary serving cell (PScell).

The preset cell may be the cell associated with the first UE DRX configuration. By sending the first cell discontinuous transmission/reception configuration to the cell associated with the first UE DRX configuration, the UE can communicate based on the cell discontinuous transmission/reception configuration in the cell and meet the UE DRX requirements, achieving cell discontinuous transmission/reception.

In an embodiment, at least one set of cell discontinuous transmission/reception configuration further includes a second cell discontinuous transmission/reception configuration;
receiving at least one set of cell discontinuous transmission/reception configuration transmitted by the network device further includes:
receiving the second cell discontinuous transmission/reception configuration transmitted by the network device, wherein the second cell discontinuous transmission/reception configuration is associated with a second UE DRX configuration, and the second UE DRX configuration is different from the first UE DRX configuration.

Here, the first cell discontinuous transmission/reception configuration and the second cell discontinuous transmission/reception configuration are used to distinguish different cell discontinuous transmission/reception configurations, not to limit the number of cell discontinuous transmission/reception configurations. There may be multiple cell discontinuous transmission/reception configurations, such as two or more than two. Similarly, the first UE DRX configuration and the second UE DRX configuration are used to distinguish different UE DRX configurations, not to limit the number of UE DRX configurations, and there may be multiple UE DRX configurations, such as two or more than two.

In a possible implementation, the first cell discontinuous transmission/reception configuration may be carried in the system message, and the second cell discontinuous transmission/reception configuration may be carried in a dedicated signaling, such as an RRC message.

The network device broadcasts the first cell discontinuous transmission/reception configuration associated with the preset cell to the UE through the system message.

In a possible implementation, the preset cell may be determined based on the UE DRX configuration of the cell. For example, if all cells associated with the network device adopt the same UE DRX configuration, then the preset cell may include all the cells. If all the cells associated with the network device are associated with multiple UE DRX configurations, then the preset cell may include the cell corresponding to the UE DRX configuration associated with the first cell discontinuous transmission/reception configuration.

In a possible implementation, the first cell discontinuous transmission/reception configuration may be the default cell discontinuous transmission/reception configuration.

As an example, the first cell discontinuous transmission/reception configuration may be associated with all cells by default. Alternatively, the first cell discontinuous transmission/reception configuration may be indicated by a bitmap to indicate one or more associated cells.

As shown in FIG. 11, embodiments of the present disclosure provide an information transmission/reception method. The method is performed by the UE, and includes:
Step 1101, receiving first indication information transmitted by the network device, wherein the first indication information is used to determine a cell associated with the second cell discontinuous transmission/reception configuration.

In a possible implementation, for scenarios where multiple UE DRX configurations are configured, such as two UE DRX configurations, the access network device can configure the second cell discontinuous transmission/reception configuration associated with the second UE DRX configuration. The first indication information can be used to indicate the cell associated with the second cell discontinuous transmission/reception configuration.

In a possible implementation, the first cell discontinuous transmission/reception configuration may be associated with SPCell or SCell, and the second cell discontinuous transmission/reception configuration may be associated with SCell. For example, for two configured UE DRX configurations (the first UE DRX configuration is used for the FR1 serving cell, and the second UE DRX configuration is used for the FR2 serving cell), the first cell discontinuous transmission/reception configuration may be associated with the SPCell of FR1, and the second cell discontinuous transmission/reception configuration may be associated with the SCell of FR2.

In a possible implementation, the first indication information may include a bitmap. Each bit in the bitmap may correspond to a cell, which may use "1" to indicate that the cell is associated with the second cell discontinuous transmission/reception configuration, and "0" to indicate that the cell is not associated with the second cell discontinuous transmission/reception configuration.

In an embodiment, the first indication information is carried in the second cell discontinuous transmission/reception configuration.

The first indication information may be sent separately to the UE by the network device, or carried in the second cell discontinuous transmission/reception configuration and sent to the UE.

In this way, with the cell discontinuous transmission/reception configurations, different cell discontinuous transmission/reception configurations can be configured for different cells to meet the UE DRX configuration requirements in different cells. It meets the requirement of configuring different cell discontinuous transmission/reception configurations for different cells in CA scenarios, while also being able to adapt to UE DRX configurations of different cells.

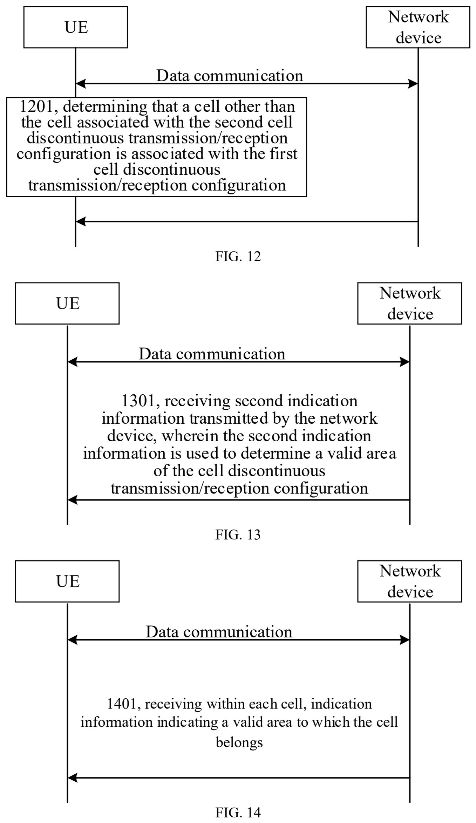

As shown in FIG. 12, embodiments of the present disclosure provide an information transmission/reception method. The method is performed by the UE, and includes:
Step 1201, determining that a cell other than the cell associated with the second cell discontinuous transmission/reception configuration is associated with the first cell discontinuous transmission/reception configuration.

In a possible implementation, the cells determined based on the first indication information that are not associated with the second cell discontinuous transmission/reception configuration may be determined by default to be associated with the first cell discontinuous transmission/reception configuration.

In a possible implementation, the cells associated with the first cell discontinuous transmission/reception configuration or the second cell discontinuous transmission/reception configuration may include but are not limited to: cells, cell groups. The cell group includes one or more cells.

The cell discontinuous transmission/reception configuration may be associated with a cell identifier and/or a cell group identifier. The cell identifier may include a cell index. The cell group identifier may include a cell group index.

In a possible implementation, the first cell discontinuous transmission/reception configuration may be associated with the first part of all cells, and the second cell discontinuous transmission/reception configuration may be associated with the second part of all cells. Here, the first part of cells are associated with the first UE DRX configuration, and the second part of cells are associated with the second UE DRX configuration.

In a possible implementation, cell association with UE DRX configuration includes: in the cell, communication is based at least on the UE DRX configuration.

In a possible implementation, cell association with the cell discontinuous transmission/reception configuration includes: in the cell, communication is based at least on the cell discontinuous transmission/reception configuration.

For example, the first cell discontinuous transmission/reception configuration may be obtained through system broadcasting, and the UE may obtain the first cell discontinuous transmission/reception configuration from the system broadcasting of a special cell (SPCell) as the default cell discontinuous transmission/reception (referred to as cell DTX/DRX) configuration, with a default index of 0. That is, it is defaulted that the cell discontinuous transmission/reception configuration of all serving cells on the network side is set as the first cell discontinuous transmission/reception configuration. Moreover, the first cell discontinuous transmission/reception configuration is associated with the first UE DRX configuration. Here, the first UE DRX configuration may be the UE DRX configuration of all serving cells.

If multiple UE DRX configurations are configured on the network side through the RRC dedicated signaling, such as two UE DRX configurations (one for FR1 serving cell and the other for FR2 serving cell), then the second cell discontinuous transmission/reception configuration, as well as the serving cell and/or serving cell group associated with the second cell discontinuous transmission/reception configuration can be configured through the RRC dedicated signaling.

The serving cell group associated with the second cell discontinuous transmission/reception configuration can be represented by a serving cell index or a SCell index list, or by a bitmap, where the bit corresponding to the serving cell in the bitmap is set to 1, indicating that the corresponding serving cell belongs to the second cell discontinuous transmission/reception configuration. Each bit in the bitmap can correspond one-to-one with a serving cell or SCell. Other serving cells that are not associated with the second cell discontinuous transmission/reception configuration default to being associated with the first cell discontinuous transmission/reception configuration.

Furthermore, the network device may also configure the association relationship between cell discontinuous transmission/reception configuration and UE DRX, that is, the UE DRX associated with cell discontinuous transmission/reception configuration or the cell discontinuous transmission/reception configuration associated with UE DRX. The association may be performed through association indexing, that is, establishing a correspondence relationship between UE DRX index and cell discontinuous transmission/reception configuration index.

In an embodiment, cell configuration information of the network device includes at least one of:
information of a cell discontinuous transmission/reception configuration associated with each cell; or
information of UE DRX configuration associated with each cell.

The cell configuration information may indicate at least one of the cell identifier or cell resource configuration.

The cell configuration information may indicate the cell discontinuous transmission/reception configuration and/or UE DRX configuration associated with the cell. For example, the cell configuration information may indicate the index of the cell discontinuous transmission/reception configuration and/or the index of the UE DRX configuration associated with the cell.

In a possible implementation, the information of the cell discontinuous transmission/reception configuration associated with each cell may indicate the identifier of the cell discontinuous transmission/reception configuration and/or the cell discontinuous transmission/reception configuration.

In a possible implementation, the information of the UE DRX configuration associated with each cell may indicate the identifier of the UE DRX configuration, and/or the UE DRX configuration.

The cell configuration information may also indicate whether the cell is associated with a specific cell discontinuous transmission/reception configuration and/or UE DRX configuration. For example, the cell configuration information may indicate whether it is associated with an index of a specific cell discontinuous transmission/reception configuration and/or an index of a specific UE DRX configuration.

In a possible implementation, as shown in FIG. 4, the association between the cell discontinuous transmission/reception configuration (represented by Cell DTX/DRX in FIG. 4) and the UE DRX configuration (represented by UE C-DRX in FIG. 4) can be pre-configured. Therefore, based on the cell configuration information, the cell discontinuous transmission/reception configuration or UE DRX configuration associated with the cell (represented by SCell in FIG. 4) can be determined respectively.

In a possible implementation, as shown in FIG. 5, the cell configuration information may indicate the cell discontinuous transmission/reception configuration (represented by Cell DTX/DRX in FIG. 5) and UE DRX configuration (represented by UE C-DRX in FIG. 5) associated with the cell (represented by SCell in FIG. 5).

For example, when configuring SCells, each SCell is associated with a cell discontinuous transmission/reception configuration index in its configuration (such as the index of the first cell discontinuous transmission/reception configuration or the index of the second cell discontinuous transmission/reception configuration). Alternatively, the configuration of each SCell may carry indication information of whether it is associated with the second cell discontinuous transmission/reception configuration. If the indication is yes, then the SCell is associated with the second cell discontinuous transmission/reception configuration.

For example, when configuring SCells, if each SCell configuration is associated with the second UE DRX, then based on the second cell discontinuous transmission/reception configuration associated with the second UE DRX, the SCell is determined by default to be associated with the second cell discontinuous transmission/reception configuration.

In an embodiment, receiving the first cell discontinuous transmission/reception configuration transmitted by the network device includes:
receiving the first cell discontinuous transmission/reception configuration transmitted by the network device in a first frequency band.

In an embodiment, receiving the second cell discontinuous transmission/reception configuration transmitted by the network device includes:
receiving the second cell discontinuous transmission/reception configuration transmitted by the network device in a second frequency band.

In the CA scenario, each MAC entity may be configured with one UE DRX or multiple UE DRX, such as two UE DRX, and use different UE DRX configurations in different frequency bands. Different frequency bands may include FR1 and FR2.

For example, the first frequency band may be FR1, and the second frequency band may be FR2.

In a possible implementation, the first cell discontinuous transmission/reception configuration may be carried in a system message within the first frequency band and broadcasted by the network device to the UE.

In a possible implementation, the second cell discontinuous transmission/reception configuration may be carried in a system message within the second frequency band and broadcasted by the network device to the UE.

In a possible implementation, the cell discontinuous transmission/reception configuration received in a frequency band is associated with the cell operating in that band.

For example, the network side configures multiple UE DRX configurations via the RRC dedicated signaling, such as two UE DRX configurations (one for the FR1 serving cell and another for the FR2 serving cell). The PCell belongs to FR1, and the SCell belongs to FR2.

The UE can determine that all FR1 serving cells are associated with the first cell discontinuous transmission/reception configuration obtained on the Pcell, and meanwhile the first cell discontinuous transmission/reception configuration has an association relationship with the UE DRX configuration of FR1. FR2 serving cells are associated with the second cell discontinuous transmission/reception configuration obtained on the FR2 SCell, and meanwhile the second cell discontinuous transmission/reception configuration is correlated with the UE DRX configuration of FR2.

In a possible implementation, the network device may send configuration information to the UE within the cell, wherein the configuration information can indicate the index of the cell discontinuous transmission/reception configuration of the cell.

For example, the network device can configure an SCell index to indicate UE to obtain the cell discontinuous transmission/reception configuration on the system broadcast of the SCell.

In an embodiment, the cell configuration information of the second frequency band cell is used to determine at least one of:
the cell discontinuous transmission/reception configuration associated with the second frequency band cell;
   or,
UE DRX configuration associated with the second frequency band cell;
wherein, different cell discontinuous transmission/reception configurations are associated with different UE DRX configurations.

The cell configuration information may be used to indicate one of the following: cell identifier, cell resource configuration.

The cell configuration information may indicate the cell discontinuous transmission/reception configuration and/or UE DRX configuration associated with the cell. For example, the cell configuration information may indicate the index of the cell discontinuous transmission/reception configuration and/or the index of the UE DRX configuration associated with the cell.

The cell configuration information may also indicate whether the cell is associated with a specific cell discontinuous transmission/reception configuration and/or UE DRX configuration. For example, the cell configuration information may indicate whether the cell is associated with an index of a specific cell discontinuous transmission/reception configuration and/or an index of a specific UE DRX configuration.

In a possible implementation, the association relationship between the cell discontinuous transmission/reception configuration and the UE DRX configuration can be pre-configured. Therefore, after determining the cell discontinuous transmission/reception configuration or UE DRX configuration associated with the cell based on the cell configuration information, the UE DRX configuration or cell discontinuous transmission/reception configuration associated with the cell can be determined respectively.

For example, when configuring SCells in the second frequency band, each SCell is associated with a cell discontinuous transmission/reception configuration index in its configuration (such as the index of the first cell discontinuous transmission/reception configuration or the index of the second cell discontinuous transmission/reception configuration). Alternatively, the configuration of each SCell may carry indication information of whether it is associated with the second cell discontinuous transmission/reception configuration. If the indication is yes, then the SCell is associated with the second cell discontinuous transmission/reception configuration.

For example, when configuring SCells within the second frequency band, if each SCell configuration is associated with a second UE DRX, then based on the second cell discontinuous transmission/reception configuration associated with the second UE DRX, the SCell is defaulted to be associated with the second cell discontinuous transmission/reception configuration.

In this way, by configuring multiple cell discontinuous transmission/reception configurations, different cell discontinuous transmission/reception configurations are configured for cells in different frequency bands to meet the UE DRX configuration requirements in different frequency bands. It meets the requirement of configuring different cell discontinuous transmission/reception configurations for different frequency band cells in CA scenarios, while also being able to adapt to UE DRX configurations for different frequency band cells.

In an embodiment, the cell discontinuous transmission/reception configuration includes the identifier of at least one cell associated with the cell discontinuous transmission/reception configuration; and/or, the cell discontinuous transmission/reception configuration includes the identifier of the UE DRX configuration associated with the cell discontinuous transmission/reception configuration.

In a possible implementation, the cell discontinuous transmission/reception configuration may be carried in a dedicated signaling and sent to the UE. For example, the cell discontinuous transmission/reception configuration may be carried in an RRC message and sent to the UE.

In a possible implementation, the cell discontinuous transmission/reception configuration may indicate the identifier of the cell associated with the cell discontinuous transmission/reception configuration, such as the cell index.

In a possible implementation, the cell discontinuous transmission/reception configuration may be used to determine the cell group associated with the cell discontinuous transmission/reception configuration.

In a possible implementation, the cell discontinuous transmission/reception configuration may indicate the identifier of the cell group associated with the cell discontinuous transmission/reception configuration, such as the cell group index.

In a possible implementation, the first indication information may carry a bitmap. Each bit in the bitmap may correspond to a cell and/or cell group, which can use "1" to indicate that the cell and/or cell group is associated with the cell discontinuous transmission/reception configuration, and "0" to indicate that the cell and/or cell group is not associated with the cell discontinuous transmission/reception configuration.

In a possible implementation, the cell discontinuous transmission/reception configuration may indicate the identifier of the UE DRX configuration associated with the cell discontinuous transmission/reception configuration. The identifier of the UE DRX configuration may include but is not limited to the index of UE DRX.

For example, the cell discontinuous transmission/reception configuration of the cell may indicate the cell discontinuous transmission/reception configuration and the identifier of the UE DRX configuration, which indicates that the cell discontinuous transmission/reception configuration is associated with the UE DRX configuration identified by the identifier of the UE DRX configuration.

In a possible implementation, the network device may send N sets of cell discontinuous transmission/reception configurations, as well as the cell and/or UE DRX configuration associated with each cell discontinuous transmission/reception configuration. N is a positive integer greater than 1.

For example, if the cell discontinuous transmission/reception configuration is obtained through the RRC dedicated signaling, the RRC signaling also configures the cell group and/or UE DRX configuration associated with the cell discontinuous transmission/reception configuration.

The cell group associated with the cell discontinuous transmission/reception configuration is represented by the serving cell index or SCell index list. The cell group associated with the cell discontinuous transmission/reception configuration may also be represented by a bitmap, where the corresponding bit in the bitmap is set to 1 to indicate that the corresponding serving cell is associated with the cell discontinuous transmission/reception configuration. Each bit in the bitmap corresponds one-to-one to a serving cell or SCell.

For the associated UE DRX configuration, the association relationship can be represented by configuring the UE DRX configuration index in the cell discontinuous transmission/reception configuration.

In an embodiment, the UE DRX configuration includes at least one of:
UE connected state-discontinuous reception (C-DRX) configuration per cell; or
UE C-DRX configuration per cell group.

The cell discontinuous transmission/reception configuration may be at the cell granularity or at the cell group granularity. Different cells or cell groups may have different cell discontinuous transmission/reception configurations. To adapt to the cell discontinuous transmission/reception configuration per cell or per cell group, the UE DRX configuration may also be per cell or per cell group granularity, so as to achieve matching of transmission/reception between the access network device and the UE within the cell or cell group. For example, both the cell and UE need to be within the on Duration period, in order to communicate.

For example, in the CA scenario, multiple serving cells share a MAC entity, and each MAC entity is configured with one UE DRX or two UE DRX (one for the FR1 serving cell and the other for the FR2 serving cell). The Cell DTX/DRX is configured at the Cell granularity. In order to better save energy on the network side, it is necessary to overlap the active time period of Cell DTX and the active time period of UE C-DRX as much as possible. For this purpose, the network side can configure UE C-DRX according to the serving cell granularity or serving cell group granularity, that is, the network side can configure multiple UE C-DRX configurations, and each UE C-DRX configuration is associated with a serving cell or a serving cell group. When there is dynamic scheduling or retransmission scheduling in a certain serving cell, only the DRX timer of the UE C-DRX corresponding to that serving cell is affected. The DRX timer includes: drx-InactivityTimer, drx-RetransmissionTimerDL, drx-RetransmissionTimerUL, drx-HARQ-RTT-TimerDL, drx-HARQ-RTT-TimerUL, etc.

As shown in FIG. 13, embodiments of the present disclosure provide an information transmission/reception method. The method is performed by the UE, and includes:
Step 1301, receiving second indication information transmitted by the network device, wherein the second indication information is used to determine a valid area of the cell discontinuous transmission/reception configuration.

In a possible implementation, the second indication information may indicate at least one of:
geographic location information of the valid area, such as geographic coordinate location information;
network location information of the valid area; one or more cell information.

In a possible implementation, the valid area may include at least one of:
one or more cells;
one or more access network coverage areas; or
a tracking area.

In a possible implementation, the UE may determine whether it is located in the valid area of the cell discontinuous transmission/reception configuration based on its current location information and the valid area, and then confirm whether to use the cell discontinuous transmission/reception configuration.

For example, if the UE determines that it is currently located within the valid area, it uses the cell discontinuous transmission/reception configuration associated with the valid area. Otherwise, the UE does not use the cell discontinuous transmission/reception configuration associated with the valid area.

For example, the cell discontinuous transmission/reception configuration is configured based on the valid area, that is, within a range of the valid area, the cell discontinuous transmission/reception configuration is the same.

The UE may determine whether to change the cell discontinuous transmission/reception configuration based on the valid area, rather than being limited to determining whether to change the cell discontinuous transmission/reception configuration based on the cell, improving the flexibility of determining whether to change the cell discontinuous transmission/reception configuration.

In an embodiment, the cell discontinuous transmission/reception configuration includes the second indication information.

The valid area of the cell discontinuous transmission/reception configuration may be carried in the second indication information of the cell discontinuous transmission/reception configuration.

In an embodiment, the second indication information includes at least one of:
an area identifier;
an identifier of at least one cell;
an access network code; or
a tracking area code.

The area identifier may be used to identify a pre-designated area.

In a possible implementation, there may be multiple identifiers of cells, multiple access network codes, and/or multiple tracking area codes, i.e. indicated in the form of a list.

For example, if the cell discontinuous transmission/reception configuration is configured through system broadcasting, the second information of the cell discontinuous transmission/reception configuration may indicate the area identifier of the valid area, the list of cell identifiers associated with the valid area, the list of access network codes associated with the valid area, or the list of tracking area codes associated with the valid area, etc. If it is the area identifier, the area identifier may be systemInformationAreaID or a newly defined area identifier, indicating the valid area range of the cell discontinuous transmission/reception configuration.

In a possible implementation, the area identifier may be an integer value.

For another example, if the cell discontinuous transmission/reception configuration is configured through the dedicated signaling, a valid area associated with the cell discontinuous transmission/reception configuration may also be configured. The second information may indicate the area identifier of the valid area, the list of cell identifiers associated with the valid area, the list of access network codes associated with the valid area, or the list of tracking area codes associated with the valid area, etc. If it is the area identifier, the area identifier may be systemInformationAreaID or a newly defined area identifier, indicating the valid area range of the cell discontinuous transmission/reception configuration.

The UE determines whether the serving cell belongs to the valid area and whether to continue using the cell discontinuous transmission/reception configuration associated with the valid area.

As shown in FIG. 14, embodiments of the present disclosure provide an information transmission/reception method. The method is performed by the UE, and includes:
Step 1401, receiving within each cell, indication information indicating a valid area where the cell is located.

The cell may broadcast the indication information of the corresponding valid area, for example, the access network device may broadcast the area identifier of the valid area to which the cell belongs within the cell. After the UE switches to another cell, the area identifier broadcasted by the target cell is compared with the already stored area identifier corresponding to the cell discontinuous transmission/reception configuration. If they are the same, it means that the cell discontinuous transmission/reception configuration of the target cell is the same as the stored cell discontinuous transmission/reception configuration. If they are different, it means that the cell discontinuous transmission/reception configuration of the target cell is different from the stored cell discontinuous transmission/reception configuration, and the current stored cell discontinuous transmission/reception configuration needs to be updated.

The UE may determine whether to change the cell discontinuous transmission/reception configuration based on the valid area, rather than being limited to determining whether to change the cell discontinuous transmission/reception configuration based on the cell, improving the flexibility of determining whether to change the cell discontinuous transmission/reception configuration.

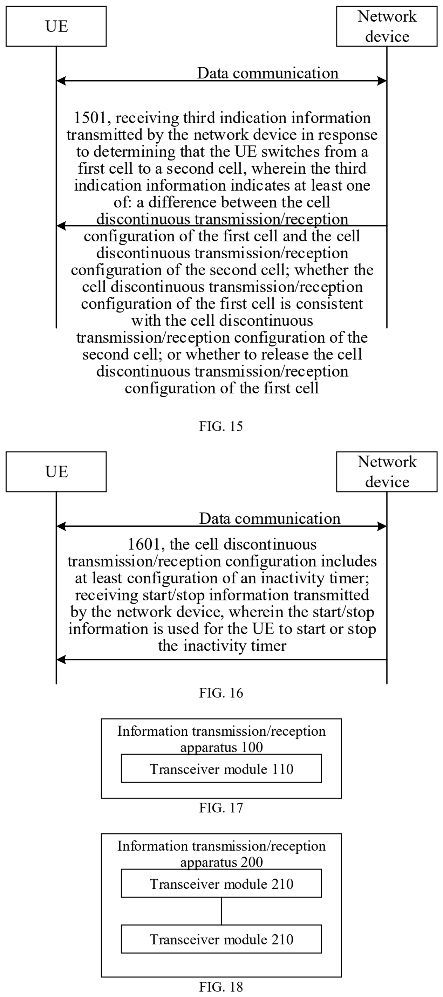

As shown in FIG. 15, embodiments of the present disclosure provide an information transmission/reception method. The method is performed by the UE, and includes:

Step 1501, receiving third indication information transmitted by the network device in response to determining that the UE switches from a first cell to a second cell, wherein the third indication information indicates at least one of:
a difference between the cell discontinuous transmission/reception configuration of the first cell and the cell discontinuous transmission/reception configuration of the second cell;
whether the cell discontinuous transmission/reception configuration of the first cell is consistent with the cell discontinuous transmission/reception configuration of the second cell; or
whether to release the cell discontinuous transmission/reception configuration of the first cell.

When the UE switches from the first cell to the second cell, the cell discontinuous transmission/reception configuration used by the UE in the second cell may be determined based on the third indication information received in the second cell.

The third indication information received within the second cell may indicate the difference between the cell discontinuous transmission/reception configuration used in the first cell and the cell discontinuous transmission/reception configuration used in the second cell. The UE may obtain the cell discontinuous transmission/reception configuration used in the second cell based on the cell discontinuous transmission/reception configuration used in the first cell and the difference.

The third indication information received in the second cell may indicate whether the cell discontinuous transmission/reception configuration used in the first cell is consistent with the cell discontinuous transmission/reception configuration used in the second cell. If they are consistent, the UE will continue to use the cell discontinuous transmission/reception configuration used in the first cell in the second cell. If there is inconsistency, the UE may determine the cell discontinuous transmission/reception configuration used in the second cell.

The third indication information received within the second cell may indicate whether the UE needs to release the cell discontinuous transmission/reception configuration used in the first cell. If the indication information indicates that the UE needs to release the cell discontinuous transmission/reception configuration used in the first cell, the UE may release the cell discontinuous transmission/reception configuration used in the first cell and obtain the cell discontinuous transmission/reception configuration used in the second cell.

In a possible implementation, the third indication information indicates whether the UE needs to release the cell discontinuous transmission/reception configuration used in the first cell, implicitly indicating whether the cell discontinuous transmission/reception configuration of the first cell is the same as that of the second cell.

Here, the first cell may be the current serving cell of the UE, and the second cell may be the target cell for the UE to switch to.

For example, if the cell discontinuous transmission/reception configuration is configured through the dedicated signaling, the dedicated signaling of the target cell can configure the cell discontinuous transmission/reception configuration of the target cell in the form of third indication information indicating the difference. For example, if the target cell is not configured with a cell discontinuous transmission/reception configuration, it means that the cell discontinuous transmission/reception configuration of the target cell is the same as the cell discontinuous transmission/reception configuration used by the UE before switching cells (i.e., the first cell discontinuous transmission/reception configuration).

For example, the cell discontinuous transmission/reception configuration may be configured through the system message or dedicated signaling. When the UE switches to another cell (target cell), the target cell uses an explicit indication in the dedicated signaling to indicate whether the cell discontinuous transmission/reception configuration is the same as that before the switch, or whether to release the previous configuration.

The network device may directly indicate to the UE whether to change the cell discontinuous transmission/reception configuration through the third indication information, improving the flexibility of UE to determine whether to change the cell discontinuous transmission/reception configuration.

As shown in FIG. 16, embodiments of the present disclosure provide an information transmission/reception method. The method is performed by the UE, and includes:
Step 1601, the cell discontinuous transmission/reception configuration at least includes configuration of an inactivity timer; receiving start/stop information transmitted by the network device, wherein the start/stop information is used for the UE to start or stop the inactivity timer.

In a possible implementation, the start/stop information explicitly indicates whether to start or stop the inactivity timer. For example, the start/stop information may occupy 1 bit, with "1" indicating the start of the inactivity timer and "0" indicating the stop of the inactivity timer.

In a possible implementation, the start/stop information implicitly indicates whether to start or stop the inactivity timer. For example, if the logical channel (LC) configured by the network device is associated with an inactivity timer, it means that the inactivity timer for that LC is to be started.

The cell discontinuous transmission/reception configuration may include: cell discontinuous transmission (cell DTX) configuration and/or cell discontinuous reception (cell DRX) configuration.

Here, the inactivity timer may include a transmission inactivity timer in the Cell DTX configuration and/or a reception inactivity timer in the Cell DRX configuration.

The cell discontinuous transmission/reception configuration may include at least one of: period, offset, and on duration. Moreover, the cell discontinuous transmission/reception configuration may also include inactivity timer configuration.

The inactivity timer is used to time the inactivity period after the on duration period in DTX and/or DRX. During the inactivity period, the network device and UE may remain active for communication.

In a possible implementation, the start/stop information may be carried by, but is not limited to, at least one of:
Downlink Control Information (DCI);
the RRC message; or
a transport Block (TB).

In a possible implementation, the inactivity timer may be at the granularity of Semi-Persistent Scheduling (SPS).

In a possible implementation, the inactivity timer may be at the configured grant (CG) granularity.

In a possible implementation, the deactivation timer can be at the logical channel (LC) granularity.

In a possible implementation, the inactivity timer can be at the Logical Channel Group (LCG) granularity.

In a possible implementation, the start/stop information may indicate the start or stop of the inactivity time at the SPS granularity and/or the inactivity timer at the LC granularity.

For example, in the downlink (DL) scenario, i.e. cell DTX, when the UE receives the scheduling information DCI, the DCI indicates whether to start the inactivity timer. For SPS, whether to start the inactivity timer after receiving business is configured at the SPS granularity. Alternatively, the RRC signaling can configure the inactivity timer or configure the indication of whether to start the inactivity timer at the granularity of Logical Channel Identity (LCID) or Logical Channel Group Identity (LCGID). If the LCG where the LCID or LCGID contained in the TB received by the UE is located is associated with an inactivity timer or associated with an indication of starting an inactivity timer, the inactivity timer is started.

For example, in the uplink (UL) scenario, i.e. cell DRX, when the UE receives the scheduling information DCI, the DCI indicates whether to start the inactivity timer. For CG, whether to start the inactivity timer after sending business is configured at the CG granularity. Alternatively, the RRC signaling can configure the inactivity timer or configure the indication of whether to start the inactivity timer at the granularity of Logical Channel Identity (LCID) or Logical Channel Group Identity (LCGID). If the LCG where the LCID or LCGID contained in the TB sent by the UE is located is associated with an inactivity timer or associated with an indication of starting an inactivity timer, the inactivity timer is started.

The network device instructs the UE to start or stop the inactivity timer through the start/stop information, no longer limited to the fixed mode of configuring the inactivity time or enabling the inactivity timer, which improves the flexibility of inactivity timer control.

The following provides multiple specific examples in conjunction with any of the above embodiments:

### Example 1:

Obtaining the cell DTX/DRX configuration (i.e., cell discontinuous transmission/reception configuration) in CA or MR-DC scenarios.

Scheme 1: If the cell DTX/DRX configuration is obtained via system broadcast, the cell DTX/DRX configuration obtained from the SPCell's system broadcast serves as the default cell DTX/DRX configuration, with the default index set to 0. All serving cells configured by the network side adopt this default cell DTX/DRX configuration. Additionally, this default cell DTX/DRX configuration is associated with the UE DRX.

If the network side configures two or more UE DRX configurations via RRC dedicated signaling, such as in a dual DRX scenario, it then configures the cell DTX/DRX configuration and its associated serving cell group through RRC dedicated signaling. The serving cell group is represented by a serving cell index or a list of SCell indices, or a bitmap. A bit set to 1 indicates that the corresponding serving cell belongs to the cell DTX/DRX configuration. Each bit in the bitmap corresponds one-to-one with a serving cell or SCell. Other serving cells are associated with the default cell DTX/DRX configuration. Furthermore, the network side also configures the association between the cell DTX/DRX configuration and the UE DRX configuration, i.e., the UE DRX configuration associated with the cell DTX/DRX configuration, or the cell DTX/DRX configuration associated with the UE DRX configuration, which can be linked via an association index method, such as the UE DRX configuration index or the cell DTX/DRX configuration index.

Alternatively,
when configuring SCells, each SCell configuration is associated with a cell DTX/DRX configuration index or indication information of whether it is associated with a second cell DTX/DRX configuration. If the indication is yes, the SCell is associated with the second cell DTX/DRX configuration.

Alternatively,
when configuring SCells, if a second UE DRX is associated in each SCell configuration, the SCell will be default-associated with the second cell DTX/DRX.

If the network side configures two or more UE DRX configurations via RRC dedicated signaling, such as in a dual DRX scenario, and the Pcell belongs to FR1, the UE can obtain the cell DTX/DRX configuration from any FR2 SCell in the system broadcast. The UE defaults to determine that the cell DTX/DRX configuration obtained from the Pcell is associated with all FR1 serving cells, and this cell DTX/DRX configuration is associated with the FR1 UE DRX configuration. Similarly, all FR2 serving cells are associated with the cell DTX/DRX configuration obtained from the FR2 SCell, and this cell DTX/DRX configuration is associated with the FR2 UE DRX configuration. Alternatively, the network side may configure an SCell index to indicate the UE to obtain the cell DTX/DRX configuration from the cell's system broadcast.

Alternatively,
when configuring SCells, each SCell configuration is associated with a cell DTX/DRX index or indication information of whether it is associated with a second cell DTX/DRX configuration. If the indication is yes, the SCell is associated with the second cell DTX/DRX configuration.

Alternatively,
when configuring SCells, if each SCell configuration is associated with the second UE DRX, the second UE DRX is defaulted to be associated with the second cell DTX/DRX configuration, or the associated cell DTX/DRX configuration may be configured through the second UE DRX configuration, thus obtaining the cell DTX/DRX configuration associated with the SCell.

Scheme 2: If the configuration of cell DTX/DRX is obtained through RRC dedicated signaling, then RRC signaling also configures the cell group and/or UE DRX configuration associated with the cell DTX/DRX configuration.

The serving cell group is represented by a serving cell index or SCell index list. Alternatively, it may be represented by a bitmap, where setting the corresponding bit to 1 indicates that the serving cell belongs to the cell DTX/DRX configuration. Each bit of the bitmap corresponds one-to-one to a serving cell or SCell.

For the associated UE DRX configuration, the association relationship may be represented by configuring the UE DRX configuration index in the cell DTX/DRX configuration.

Alternatively,
when configuring SCells, each SCell configuration is associated with a cell DTX/DRX index or indication information of whether it is associated with a second cell DTX/DRX configuration. If the indication is yes, the SCell is associated with the second cell DTX/DRX configuration.

Alternatively,
when configuring SCells, if each SCell configuration is associated with the second UE DRX, it is defaulted to be associated with the second cell DTX/DRX configuration, or the associated cell DTX/DRX configuration may be configured through the second UE DRX, thus obtaining the cell DTX/DRX configuration associated with the SCell.

### Example 2:

### UE C-DRX configuration per serving cell or per serving cell group

In the CA scenario, multiple serving cells share a MAC entity, and each MAC entity is configured with one UE DRX configuration or two UE DRX configurations (one UE DRX configuration for the FR1 serving cell and the other UE DRX configuration for the FR2 serving cell). The Cell DTX/DRX is configured at the cell granularity. In order to better save energy on the network side, it is necessary to overlap the active time period of Cell DTX with the active time period of UE C-DRX as much as possible. For this purpose, the network side can configure UE C-DRX according to the serving cell granularity or serving cell group granularity, that is, the network side can configure multiple UE C-DRX configurations, and each UE C-DRX configuration is associated with a serving cell or a serving cell group. When there is dynamic scheduling or retransmission scheduling in a certain serving cell, only the DRX timer of the UE C-DRX corresponding to that serving cell is affected. The DRX timer includes: drx-InactivityTimer, drx-RetransmissionTimerDL, drx-RetransmissionTimerUL, drx-HARQ-RTT-TimerDL, drx-HARQ-RTT-TimerUL, etc.

### Example 3:

### Obtaining Cell DTX/DRX configuration for UE during moving

The cell DTX/DRX is configured at the area granularity, which means that within an area, the cell DTX/DRX configuration is the same.

Scheme 1: If the cell DTX/DRX configuration is configured through system broadcast, the cell DTX/DRX configuration can be associated with or contain area information. The area information may be an area identifier (area ID), a cell list, an access network code list (RAN code list), or a tracking area code list (TAC list), etc. If the area information is an area ID, the area ID may be systemInformationAreaID or a newly defined area ID, representing the valid area range of cell DTX/DRX configuration information.

If area information is in the form of an area ID, each cell will broadcast that area ID. When the UE switches to another cell, the area ID broadcasted by the target cell will be compared with the area ID corresponding to the stored cell DTX/DRX configuration. If they are the same, it means that the cell DTX/DRX configuration of the target cell is the same as the stored cell DTX/DRX configuration. The area ID may be an integer value.

Scheme 2: If the cell DTX/DRX configuration is configured through dedicated signaling, the dedicated signaling of the target cell can use delta configuration to configure the cell DTX/DRX configuration. For example, if the target cell is not configured with the cell DTX/DRX configuration, it means that the cell DTX/DRX configuration is the same as the previous configuration.

Scheme 3: No matter whether the cell DTX/DRX configuration is configured through system broadcast or through dedicated signaling, when the UE switches to another cell, the target cell uses an explicit indication in the dedicated signaling to indicate whether the cell DTX/DRX configuration is the same as the previous configuration, or whether to release the previous configuration, etc.

Scheme 4: If the cell DTX/DRX configuration is configured through dedicated signaling, area information of an area (valid area) associated with the cell DTX/DRX configuration is also configured. The area information of the valid area may be an area identifier (area ID), a cell list, an access network code list (RAN code list), or a tracking area code list (TAC list), etc. If the area information is the area ID, the area ID may be systemInformationAreaID or a newly defined area ID, representing the valid area range of cell DTX/DRX configuration information.

The UE determines whether the serving cell belongs to the area and whether to continue using the cell DTX/DRX configuration.

### Example 4:

### Configuration and use of inactivity timer for cell DTX.

When configuring Cell DTX/DRX configuration on the network side, the Cell DTX/DRX configuration includes at least: period, offset, and on duration. Optionally, the Cell DTX/DRX configuration also includes at least one inactivity timer configuration.

For DL, i.e. cell DTX, when the UE receives one scheduling information DCI, the DCI indicates whether to start the inactivity timer. For SPS, whether to start the inactivity timer after receiving business is configured per SPS. Alternatively, the RRC signaling may configure the inactivity timer or configure the indication of whether to start the inactivity timer per LCID or LCG id. If the LCG where the LCID or LCGID contained in the TB received by the UE is located is associated with an inactivity timer or associated with an indication of starting an inactivity timer, the inactivity timer is started.

For UL, i.e. Cell DRX, when the UE receives one scheduling information DCI, the DCI indicates whether to start the inactivity timer. For CG, whether to start the inactivity timer after sending business is configured per CG. Alternatively, the RRC signaling may configure the inactivity timer or configure the indication of whether to start the inactivity timer per LCID or LCG ID. If the LCG where the LCID or LCGID contained in the TB sent by the UE is located is associated with an inactivity timer or associated with an indication of starting an inactivity timer, the inactivity timer is started.

As shown in FIG. 17, embodiments of the present disclosure provide an information transmission/reception apparatus 100. The apparatus is arranged in a network device, and includes:
a transceiver module 110, configured to transmit at least one set of cell discontinuous transmission/reception configuration to a user equipment (UE), wherein one set of cell discontinuous transmission/reception configuration is associated with at least one cell and/or one UE discontinuous reception (DRX) configuration, wherein the cell discontinuous transmission/reception configuration includes a cell discontinuous transmission (Cell DTX) configuration and/or a cell discontinuous reception (Cell DRX) configuration.

In an embodiment, at least one set of cell discontinuous transmission/reception configuration includes a first cell discontinuous transmission/reception configuration;
the transceiver module is specifically configured to:
transmit the first cell discontinuous transmission/reception configuration to the UE, wherein the first cell discontinuous transmission/reception configuration is associated with a preset cell, and/or the first cell discontinuous transmission/reception configuration is associated with a first UE DRX configuration.

In an embodiment, the preset cell includes a serving cell of the UE.

In an embodiment, the transceiver module is specifically configured to:
transmit the first cell discontinuous transmission/reception configuration to the UE in a first frequency band.

In an embodiment, the at least one set of cell discontinuous transmission/reception configuration further includes a second cell discontinuous transmission/reception configuration;
the transceiver module is further configured to:
transmit the second cell discontinuous transmission/reception configuration to the UE, wherein the second cell discontinuous transmission/reception configuration is associated with a second UE DRX configuration, and the second UE DRX configuration is different from the first UE DRX configuration.

In an embodiment, the transceiver module is further configured to:
transmit first indication information to the UE, wherein the first indication information is used to determine a cell associated with the second cell discontinuous transmission/reception configuration.

In an embodiment, the transceiver module is specifically configured to:
transmit the second cell discontinuous transmission/reception configuration to the UE in a second frequency band.

In an embodiment, the first indication information is carried in the second cell discontinuous transmission/reception configuration.

In an embodiment, the cell discontinuous transmission/reception configuration includes an identifier of the at least one cell associated with the cell discontinuous transmission/reception configuration; and/or, the cell discontinuous transmission/reception configuration includes an identifier of the UE DRX configuration associated with the cell discontinuous transmission/reception configuration.

In an embodiment, cell configuration information of the network device includes at least one of:
information of a cell discontinuous transmission/reception configuration associated with each cell; or
information of UE DRX configuration associated with each cell.

In an embodiment, the UE DRX configuration includes at least one of:
UE connected state-discontinuous reception (C-DRX) configuration per cell; or
UE C-DRX configuration per cell group.

In an embodiment, the transceiver module is further configured to:
transmit second indication information to the UE, wherein the second indication information is used to determine a valid area of the cell discontinuous transmission/reception configuration.

In an embodiment, the second indication information includes at least one of:
an area identifier;
an identifier of at least one cell;
an access network code; or
a tracking area code.

In an embodiment, the cell discontinuous transmission/reception configuration includes the second indication information.

In an embodiment, the transceiver module is further configured to:
determine that the UE switches from a first cell to a second cell, and transmit third indication information to the UE, wherein the third indication information indicates at least one of:
a difference between the cell discontinuous transmission/reception configuration of the first cell and the cell discontinuous transmission/reception configuration of the second cell;
whether the cell discontinuous transmission/reception configuration of the first cell is consistent with the cell discontinuous transmission/reception configuration of the second cell; or
whether to release the cell discontinuous transmission/reception configuration of the first cell.

In an embodiment, the cell discontinuous transmission/reception configuration at least includes configuration of an inactivity timer;
the transceiver module is further configured to transmit start/stop information to the UE, wherein the start/stop information is used for the UE to start or stop the inactivity timer.

In an embodiment, an identifier of the cell discontinuous transmission/reception configuration is associated with an identifier of the UE DRX configuration.

As shown in FIG.18, embodiments of the present disclosure provide an information transmission/reception apparatus 200. The apparatus 200 is arranged in a UE, and includes:
a transceiver module 210, configured to receive at least one set of cell discontinuous transmission/reception configuration transmitted by a network device, wherein one set of cell discontinuous transmission/reception configuration is associated with at least one cell and/or one UE discontinuous reception (DRX) configuration, wherein the cell discontinuous transmission/reception configuration includes a cell discontinuous transmission (Cell DTX) configuration and/or a cell discontinuous reception (Cell DRX) configuration.

In an embodiment, at least one set of cell discontinuous transmission/reception configuration includes a first cell discontinuous transmission/reception configuration;
the transceiver module is specifically configured to:
receive the first cell discontinuous transmission/reception configuration transmitted by the network device, wherein the first cell discontinuous transmission/reception configuration is associated with a preset cell, and/or the first cell discontinuous transmission/reception configuration is associated with a first UE DRX configuration.

In an embodiment, the preset cell includes a serving cell of the UE.

In an embodiment, the transceiver module is specifically configured to:
receive the first cell discontinuous transmission/reception configuration transmitted by the network device in a first frequency band.

In an embodiment, the at least one set of cell discontinuous transmission/reception configuration further includes a second cell discontinuous transmission/reception configuration;
the transceiver module is further configured to receive the second cell discontinuous transmission/reception configuration transmitted by the network device, wherein the second cell discontinuous transmission/reception configuration is associated with a second UE DRX configuration, and the second UE DRX configuration is different from the first UE DRX configuration.

In an embodiment, the transceiver module is further configured to:
receive first indication information transmitted by the network device, wherein the first indication information is used to determine a cell associated with the second cell discontinuous transmission/reception configuration.

In an embodiment, the transceiver module is specifically configured to receive the second cell discontinuous transmission/reception configuration transmitted by the network device in a second frequency band.

In an embodiment, the first indication information is carried in the second cell discontinuous transmission/reception configuration.

In an embodiment, the apparatus further includes:
a processing module 220, configured to determine that a cell other than the cell associated with the second cell discontinuous transmission/reception configuration is associated with the first cell discontinuous transmission/reception configuration.

In an embodiment, the cell discontinuous transmission/reception configuration includes an identifier of the at least one cell associated with the cell discontinuous transmission/reception configuration; and/or, the cell discontinuous transmission/reception configuration includes an identifier of the UE DRX configuration associated with the cell discontinuous transmission/reception configuration.

In an embodiment, cell configuration information of the network device includes at least one of:
information of a cell discontinuous transmission/reception configuration associated with each cell; or
information of UE DRX configuration associated with each cell.

In an embodiment, the UE DRX configuration includes at least one of:
UE connected state-discontinuous reception (C-DRX) configuration per cell; or
UE C-DRX configuration per cell group.

In an embodiment, the transceiver module is further configured to:
receive second indication information transmitted by the network device, wherein the second indication information is used to determine a valid area of the cell discontinuous transmission/reception configuration.

In an embodiment, the second indication information includes at least one of:
an area identifier;
an identifier of at least one cell;
an access network code; or
a tracking area code.

In an embodiment, the cell discontinuous transmission/reception configuration includes the second indication information.

In an embodiment, the transceiver module is further configured to:
receive third indication information transmitted by the network device in response to determining that the UE switches from a first cell to a second cell, wherein the third indication information indicates at least one of:
a difference between the cell discontinuous transmission/reception configuration of the first cell and the cell discontinuous transmission/reception configuration of the second cell;
whether the cell discontinuous transmission/reception configuration of the first cell is consistent with the cell discontinuous transmission/reception configuration of the second cell; or
whether to release the cell discontinuous transmission/reception configuration of the first cell.

In an embodiment, the cell discontinuous transmission/reception configuration at least includes configuration of an inactivity timer;
the transceiver module is further configured to receive start/stop information transmitted by the network device, wherein the start/stop information is used for the UE to start or stop the inactivity timer.

In an embodiment, an identifier of the cell discontinuous transmission/reception configuration is associated with an identifier of the UE DRX configuration.

Embodiments of the present disclosure provide a communication device, including:
a processor; and
a memory, configured to store instructions executed by the processor,
wherein the processor is configured to run the executable instructions, to implement the information transmission/reception method in any of the embodiments of the present disclosure.

In an embodiment, the communication device may include, but is not limited to, at least one of a network control relay and a network device. The network device here may include a core network or an access network device, etc. Here, the access network device may include the access network device; the core network may include AMF and SMF.

The processor may include various types of storage medium, which are non-temporary computer storage medium that can continue to remember and store information on the user equipment after power down.

The processor can be connected to the memory through a bus or other means for reading executable programs stored on the memory, such as at least one of the methods shown in Figs. 2 to 10.

Embodiments of the present disclosure further provide a computer storage medium, which stores a computer executable program. When the executable program is executed by a processor, the information transmission/reception method of any embodiment of the present disclosure is implemented, for example, at least one of the methods shown in Figs. 2 to 10.

Regarding the apparatus or storage medium in the above embodiments, the specific ways in which each module performs operations have been described in detail in the relevant embodiments of the method, and will not be elaborated here.

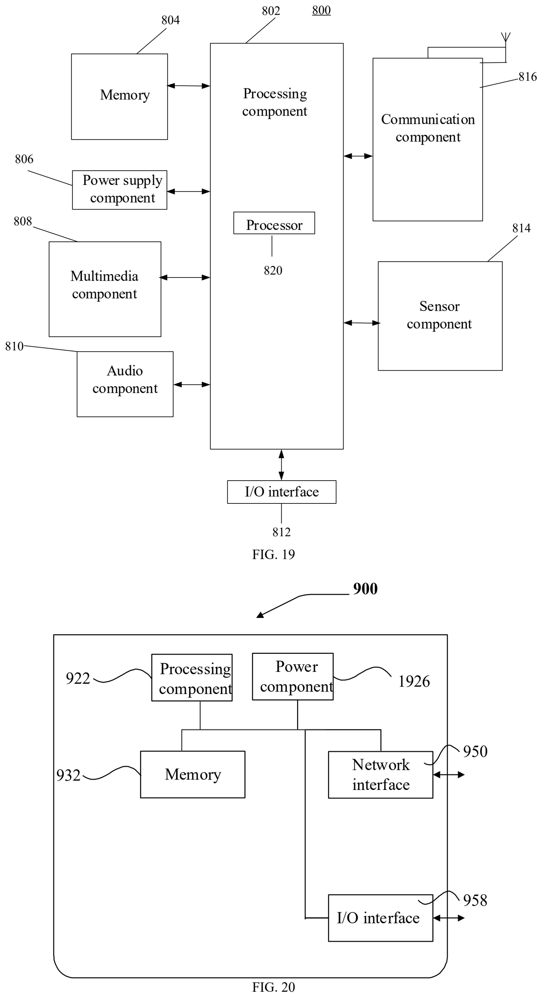

FIG. 19 is a block diagram of a UE 800 illustrated according to an illustrative embodiment. For example, the UE 800 may be a mobile phone, a computer, a digital broadcasting terminal, a messaging device, a game console, a tablet device, a medical equipment, a fitness equipment, a personal digital assistant, etc.

Referring to FIG. 19, the UE 800 may include one or more of following components: a processing component 802, a memory 804, a power supply component 806, a multimedia component 808, an audio component 810, an input/output (I/O) interface 812, a sensor component 814, and a communication component 816.

The processing component 802 generally controls the whole operation of the UE 800, such as the operations related to display, phone call, data communication, camera operation and recording operation. The processing component 802 may include one or more processors 820 to perform instructions, to complete all or part of blocks of the above method. In addition, the processing component 802 may include one or more modules for the convenience of interaction between the processing component 802 and other components. For example, the processing component 802 may include a multimedia module for the convenience of interaction between the multimedia component 808 and the processing component 802.

The memory 804 is configured to store all types of data to support the operation of the UE 800. Examples of the data include the instructions of any applications or methods operated on the UE 800, contact data, phone book data, messages, pictures, videos, etc. The memory 804 may be implemented by any type of volatile or non-volatile storage devices or their combination, such as a static random access memory (SRAM), an electrically erasable programmable read-only memory (EEPROM), an electrically programmable read-only memory (EPROM), a programmable read-only memory (PROM), a read-only memory (ROM), a magnetic memory, a flash memory, a magnetic disk or an optical disk.

The power supply component 806 may provide power for all components of the UE 800. The power supply component 806 may include power supply management system, one or more power supplies, and other units related to generating, managing and distributing power for the UE 800.

The multimedia component 808 includes an output interface screen provided between the UE 800 and the user. In some embodiments, a screen may include a liquid crystal display (LCD) and a touch panel (TP). When the screen includes a TP, the screen may be implemented as a touch screen to receive an input signal from the user. The touch panel includes one or more touch sensors to sense touch, slide and gestures on the touch panel. The touch sensor may not only sense the boundary of the touch or slide action, but also detect the duration and pressure related to the touch or slide operation. In some embodiments, the multimedia component 808 includes a front camera and/or a rear camera. When the UE 800 is in an operation mode, such as a shooting mode or a video mode, the front camera and/or the rear camera may receive external multimedia data. Each front camera and rear camera may be a fixed optical lens system or an optical lens system with a focal length and an optical zoom capacity.

The audio component 810 is configured to output and/or input an audio signal. For example, the audio component 810 includes a microphone (MIC). When the UE 800 is in operation mode, such as call mode, record mode, and speech recognition mode, the microphone is configured to receive the external audio signals. The audio signal received may be further stored in the memory 804 or sent via the communication component 816. In some embodiments, the audio component 810 further includes a speaker configured to output an audio signal.

The I/O interface 812 provides an interface for the processing component 802 and the peripheral interface module, and the peripheral interface module may be a keyboard, a click wheel, a button, etc. The buttons may include but not limited to a home button, a volume button, a start button and a lock button.

The sensor component 814 includes one or more sensors, configured to provide various aspects of status assessment for the UE 800. For example, the sensor component 814 may detect the on/off state of the UE 800 and the relative positioning of the component. For example, the component is a display and a keypad of the UE 800. The sensor component 814 may further detect the position change of the UE 800 or one component of the UE 800, the presence or absence of contact between the user and the UE 800, the orientation or acceleration/deceleration of the UE 800, and the temperature change of the UE 800. The sensor component 814 may include a proximity sensor configured to detect the existence of the objects nearby without any physical contact. The sensor component 814 may further include a light sensor such as CMOS or CCD image sensor, which is configured to use in imaging applications. In some embodiments, the sensor component 814 may further include an acceleration transducer, a gyroscope sensor, a magnetic sensor, a pressure sensor or a temperature sensor.

The communication component 816 is configured for the convenience of wire or wireless communication between the UE 800 and other devices. The UE 800 may access wireless networks based on a communication standard, such as WiFi, 2G or 3G, 4G LTE, 5G NR or their combination. In an illustrative embodiment, the communication component 816 receives a broadcast signal or broadcast-related information from an external broadcast management system via a broadcast channel. In an illustrative embodiment, the communication component 816 further includes a near field communication (NFC) module to facilitate short-range communication. For example, the NFC module may be achieved based on an RFID technology, an IrDA technology, a UWB technology, a BT technology and other technologies.

In an illustrative embodiment, the UE 800 may be implemented by one or more application specific integrated circuits (ASIC), digital signal processors (DSP), digital signal processing devices (DSPD), programmable logic devices (PLD), field programmable gate arrays (FPGA), controllers, microcontrollers, microprocessors or other electronics components, to perform the method for processing data applied to a terminal as described in the above any embodiment.

In an illustrative embodiment, a non-transitory computer readable storage medium including instructions is further provided, such as a memory 804 including instructions, the instructions may be executed by the processor 820 of the UE 800 to complete the above method. For example, the non-transitory computer readable storage medium may be a ROM, a random access memory (RAM), a CD-ROM, a magnetic tape, a floppy disk, an optical data storage device, etc.

As shown in FIG. 20, an embodiment of the present disclosure illustrates the structure of an access device. For example, the communication device 900 may be provided as a network device. The communication device may be various network elements such as access network elements and/or network functions mentioned above.

Referring to FIG. 20, the communication device 900 includes a processing component 922, which further includes one or more processors, and memory resources represented by a memory 932 for storing instructions, such as application program, that can be executed by the processing component 922. The application program stored in the memory 932 may include one or more modules each corresponding to a set of instructions. In addition, the processing component 922 is configured to execute instructions to perform any method applied on the access device described above, such as the method shown in any one of Figs. 2 to 10.

The communication device 900 may also include a power component 926 configured to perform power management of the communication device 900, a wired or wireless network interface 950 configured to connect the communication device 900 to a network, and an input/output (I/O) interface 958. The communication device 900 can operate based on operating systems stored in the memory 932, such as Windows Server TM, Mac OS XTM, UnixTM, LinuxTM, FreeBSDTM, or the like.

In the absence of contradiction, each step in the above embodiment or example can be implemented as an independent embodiment, and the steps can be arbitrarily combined. For example, the solution after removing some steps in a certain embodiment or example can also be implemented as an independent embodiment, and the order of each step in a certain embodiment or example can be arbitrarily exchanged. In addition, the optional methods or examples in a certain embodiment or example can be arbitrarily combined. In addition, various implementations or embodiments can be combined arbitrarily, for example, some or all steps of different implementations or embodiments can be combined arbitrarily, and a certain implementation or embodiment can be combined arbitrarily with alternative implementations or optional examples of other implementations or embodiments.

After considering the specification and practicing the disclosure herein, those skilled in the art will easily think of other embodiments of the present application. The present application is intended to cover any variations, usages, or adaptive changes of the present disclosure. These variations, usages, or adaptive changes follow the general principles of the present disclosure and include common knowledge or conventional technical means in the technical field not disclosed by the present disclosure. The specification and embodiments are only be illustrative, and the true scope and spirit of the disclosure are indicated by the following claims.

It should be understood that the present disclosure is not limited to the precise structure described above and shown in the drawings, and various modifications and changes may be made without departing from its scope. The scope of the present application is only limited by the appended claims.

## Claims

1. An information transmission/reception method, performed by a network device, comprising:
transmitting at least one set of cell discontinuous transmission/reception configuration to a user equipment (UE), wherein one set of cell discontinuous transmission/reception configuration is associated with at least one cell and/or one UE discontinuous reception (DRX) configuration, wherein the cell discontinuous transmission/reception configuration comprises a cell discontinuous transmission (Cell DTX) configuration and/or a cell discontinuous reception (Cell DRX) configuration.

2. The method of claim 1, wherein at least one set of cell discontinuous transmission/reception configuration comprises a first cell discontinuous transmission/reception configuration;
transmitting at least one set of cell discontinuous transmission/reception configuration to the UE comprises:
transmitting the first cell discontinuous transmission/reception configuration to the UE, wherein the first cell discontinuous transmission/reception configuration is associated with a preset cell, and/or the first cell discontinuous transmission/reception configuration is associated with a first UE DRX configuration.

3. The method of claim 2, wherein the preset cell comprises a serving cell of the UE.

4. The method of claim 2 or 3, wherein transmitting the first cell discontinuous transmission/reception configuration to the UE comprises:
transmitting the first cell discontinuous transmission/reception configuration to the UE in a first frequency band.

5. The method of any of claims 2-4, wherein the at least one set of cell discontinuous transmission/reception configuration further comprises a second cell discontinuous transmission/reception configuration;
transmitting at least one set of cell discontinuous transmission/reception configuration to the UE further comprises:
transmitting the second cell discontinuous transmission/reception configuration to the UE, wherein the second cell discontinuous transmission/reception configuration is associated with a second UE DRX configuration, and the second UE DRX configuration is different from the first UE DRX configuration.

6. The method of claim 5, further comprising:
transmitting first indication information to the UE, wherein the first indication information is used to determine a cell associated with the second cell discontinuous transmission/reception configuration.

7. The method of claim 5, wherein transmitting the second cell discontinuous transmission/reception configuration to the UE comprises:
transmitting the second cell discontinuous transmission/reception configuration to the UE in a second frequency band.

8. The method of claim 6, wherein
the first indication information is carried in the second cell discontinuous transmission/reception configuration.

9. The method of any of claims 1-8, wherein
the cell discontinuous transmission/reception configuration comprises an identifier of the at least one cell associated with the cell discontinuous transmission/reception configuration; and/or, the cell discontinuous transmission/reception configuration comprises an identifier of the UE DRX configuration associated with the cell discontinuous transmission/reception configuration.

10. The method of any of claims 1-9, wherein
cell configuration information of the network device comprises at least one of:
information of a cell discontinuous transmission/reception configuration associated with each cell; or
information of UE DRX configuration associated with each cell.

11. The method of any of claims 1-10, wherein
the UE DRX configuration comprises at least one of:
UE connected state-discontinuous reception (C-DRX) configuration per cell; or
UE C-DRX configuration per cell group.

12. The method of any of claims 1-11, further comprising:
transmitting second indication information to the UE, wherein the second indication information is used to determine a valid area of the cell discontinuous transmission/reception configuration.

13. The method of claim 12, wherein the second indication information comprises at least one of:
an area identifier;
an identifier of at least one cell;
an access network code; or
a tracking area code.

14. The method of claim 12 or 13, wherein the cell discontinuous transmission/reception configuration comprises the second indication information.

15. The method of any of claims 1-14, further comprising:
determining that the UE switches from a first cell to a second cell, and transmitting third indication information to the UE, wherein the third indication information indicates at least one of:
a difference between the cell discontinuous transmission/reception configuration of the first cell and the cell discontinuous transmission/reception configuration of the second cell;
whether the cell discontinuous transmission/reception configuration of the first cell is consistent with the cell discontinuous transmission/reception configuration of the second cell; or
whether to release the cell discontinuous transmission/reception configuration of the first cell.

16. The method of any of claims 1-15, wherein
the cell discontinuous transmission/reception configuration at least comprises configuration of an inactivity timer;
the method further comprises: transmitting start/stop information to the UE, wherein the start/stop information is used for the UE to start or stop the inactivity timer.

17. The method of any of claims 1-16, wherein
an identifier of the cell discontinuous transmission/reception configuration is associated with an identifier of the UE DRX configuration.

18. An information transmission/reception method, performed by a user equipment (UE), comprising:
receiving at least one set of cell discontinuous transmission/reception configuration transmitted by a network device, wherein one set of cell discontinuous transmission/reception configuration is associated with at least one cell and/or one UE discontinuous reception (DRX) configuration, wherein the cell discontinuous transmission/reception configuration comprises a cell discontinuous transmission (Cell DTX) configuration and/or a cell discontinuous reception (Cell DRX) configuration.

19. The method of claim 18, wherein at least one set of cell discontinuous transmission/reception configuration comprises a first cell discontinuous transmission/reception configuration;
receiving at least one set of cell discontinuous transmission/reception configuration transmitted by the network device comprises:
receiving the first cell discontinuous transmission/reception configuration transmitted by the network device, wherein the first cell discontinuous transmission/reception configuration is associated with a preset cell, and/or the first cell discontinuous transmission/reception configuration is associated with a first UE DRX configuration.

20. The method of claim 19, wherein the preset cell comprises a serving cell of the UE.

21. The method of claim 19 or 20, wherein receiving the first cell discontinuous transmission/reception configuration transmitted by the network device comprises:
receiving the first cell discontinuous transmission/reception configuration transmitted by the network device in a first frequency band.

22. The method of any of claims 19-21, wherein the at least one set of cell discontinuous transmission/reception configuration further comprises a second cell discontinuous transmission/reception configuration;
receiving at least one set of cell discontinuous transmission/reception configuration transmitted by the network device further comprises:
receiving the second cell discontinuous transmission/reception configuration transmitted by the network device, wherein the second cell discontinuous transmission/reception configuration is associated with a second UE DRX configuration, and the second UE DRX configuration is different from the first UE DRX configuration.

23. The method of claim 22, further comprising:
receiving first indication information transmitted by the network device, wherein the first indication information is used to determine a cell associated with the second cell discontinuous transmission/reception configuration.

24. The method of claim 22, wherein receiving the second cell discontinuous transmission/reception configuration transmitted by the network device comprises:
receiving the second cell discontinuous transmission/reception configuration transmitted by the network device in a second frequency band.

25. The method of claim 23, wherein
the first indication information is carried in the second cell discontinuous transmission/reception configuration.

26. The method of claim 23, further comprising:
determining that a cell other than the cell associated with the second cell discontinuous transmission/reception configuration is associated with the first cell discontinuous transmission/reception configuration.

27. The method of any of claims 18-26, wherein
the cell discontinuous transmission/reception configuration comprises an identifier of the at least one cell associated with the cell discontinuous transmission/reception configuration; and/or, the cell discontinuous transmission/reception configuration comprises an identifier of the UE DRX configuration associated with the cell discontinuous transmission/reception configuration.

28. The method of any of claims 18-27, wherein
cell configuration information of the network device comprises at least one of:
information of a cell discontinuous transmission/reception configuration associated with each cell; or
information of UE DRX configuration associated with each cell.

29. The method of any of claims 18-28, wherein
the UE DRX configuration comprises at least one of:
UE connected state-discontinuous reception (C-DRX) configuration per cell; or
UE C-DRX configuration per cell group.

30. The method of any of claims 18-29, further comprising:
receiving second indication information transmitted by the network device, wherein the second indication information is used to determine a valid area of the cell discontinuous transmission/reception configuration.

31. The method of claim 30, wherein the second indication information comprises at least one of:
an area identifier;
an identifier of at least one cell;
an access network code; or
a tracking area code.

32. The method of claim 30 or 31, wherein the cell discontinuous transmission/reception configuration comprises the second indication information.

33. The method of any of claims 18-32, further comprising:
receiving third indication information transmitted by the network device in response to determining that the UE switches from a first cell to a second cell, wherein the third indication information indicates at least one of:
a difference between the cell discontinuous transmission/reception configuration of the first cell and the cell discontinuous transmission/reception configuration of the second cell;
whether the cell discontinuous transmission/reception configuration of the first cell is consistent with the cell discontinuous transmission/reception configuration of the second cell; or
whether to release the cell discontinuous transmission/reception configuration of the first cell.

34. The method of any of claims 18-33, wherein
the cell discontinuous transmission/reception configuration at least comprises configuration of an inactivity timer;
the method further comprises: receiving start/stop information transmitted by the network device, wherein the start/stop information is used for the UE to start or stop the inactivity timer.

35. The method of any of claims 18-34, wherein
an identifier of the cell discontinuous transmission/reception configuration is associated with an identifier of the UE DRX configuration.

36. An information transmission/reception apparatus, arranged in a network device, comprising:
a transceiver module, configured to transmit at least one set of cell discontinuous transmission/reception configuration to a user equipment (UE), wherein one set of cell discontinuous transmission/reception configuration is associated with at least one cell and/or one UE discontinuous reception (DRX) configuration, wherein the cell discontinuous transmission/reception configuration comprises a cell discontinuous transmission (Cell DTX) configuration and/or a cell discontinuous reception (Cell DRX) configuration.

37. An information transmission/reception apparatus, arranged in a user equipment (UE), comprising:
a transceiver module, configured to receive at least one set of cell discontinuous transmission/reception configuration transmitted by a network device, wherein one set of cell discontinuous transmission/reception configuration is associated with at least one cell and/or one UE discontinuous reception (DRX) configuration, wherein the cell discontinuous transmission/reception configuration comprises a cell discontinuous transmission (Cell DTX) configuration and/or a cell discontinuous reception (Cell DRX) configuration.

38. A communication system, comprising a network device and a user equipment (UE), wherein
the network device is configured to perform the information transmission/reception method of any of claims 1-16;
the UE is configured to perform the information transmission/reception method of any of claims 17-35.

39. A communication device, comprising a processor, a transceiver, a memory, and an executable program that is stored on the memory and can be run by the processor, wherein the processor is configured to perform the information transmission/reception method of any of claims 1-16 or claims 17-36 when running the executable program.

40. A computer storage medium stored with an executable program, wherein when the executable program is executed by a processor, the information transmission/reception method of any of claims 1-16 or 17-36 can be implemented.
